(19) Europäisches Patentamt / European Patent Office / Office européen des brevets

(11) **EP 2 115 032 B2**

(12) # NEUE EUROPÄISCHE PATENTSCHRIFT

Nach dem Einspruchsverfahren


(45) Veröffentlichungstag und Bekanntmachung des Hinweises auf die Entscheidung über den Einspruch:
**22.10.2014 Patentblatt 2014/43**

(45) Hinweis auf die Patenterteilung:
**29.12.2010 Patentblatt 2010/52**

(21) Anmeldenummer: **08708045.3**

(22) Anmeldetag: **21.01.2008**

(51) Int Cl.:
***C08G 64/34*** (2006.01) ***C08G 65/26*** (2006.01)

(86) Internationale Anmeldenummer:
**PCT/EP2008/050646**

(87) Internationale Veröffentlichungsnummer:
**WO 2008/092767 (07.08.2008 Gazette 2008/32)**


(54) **VERFAHREN ZUR HERSTELLUNG VON POLYETHERCARBONATPOLYOLEN**

PROCESS FOR PREPARING POLYETHER CARBONATE POLYOLS

PROCÉDÉ DE PRODUCTION DE POLYÉTHERCARBONATE POLYOLS


(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **30.01.2007 EP 07101407**

(43) Veröffentlichungstag der Anmeldung:
**11.11.2009 Patentblatt 2009/46**



(73) Patentinhaber: **BASF SE**
**67056 Ludwigshafen (DE)**

(72) Erfinder:
- **MIJOLOVIC, Darijo**
**68309 Mannheim (DE)**
- **KUMMETER, Markus**
**68542 Heddesheim (DE)**
- **STÖSSER, Michael**
**67141 Neuhofen (DE)**
- **BAUER, Stephan**
**49179 Ostercappeln (DE)**
- **GÖTTKE, Stephan**
**69117 Heidelberg (DE)**



(56) Entgegenhaltungen:
**EP-A2- 0 222 453**
**WO-A-2008/013731**
**WO-A1-2004/029131**
**WO-A1-2004/105944**
**US-A- 5 689 012**
**US-A- 5 777 177**
**US-A- 5 919 988**
**US-A1- 2006 223 973**
**US-B1- 6 713 599**
**US-B2- 6 762 278**

- **MIHAIL IONESCU: 'Chemistry and Technology of PolyOLS FOR POLYURETHANES', 2005, RAPRA TECHNOLOGY LIMITED, SHAWBURY, SHREWSBURY, SHROPSHIRE, UK, ISBN 1859574912 Seiten 57, 167, 178 - 181**


Bemerkungen:
Die Akte enthält technische Angaben, die nach dem Eingang der Anmeldung eingereicht wurden und die nicht in dieser Patentschrift enthalten sind.

EP 2 115 032 B2

## Beschreibung

Gegenstand der Erfindung ist ein Verfahren zur Herstellung von Polyethercarbonatpolyolen durch Anlagerung von Alkylenoxiden und Kohlendioxid an H-funktionelle Startsubstanzen unter Verwendung von DMC-Katalysatoren. Polyethercarbonatpolyole können als Polyole zur Herstellung von Polyurethanen für beispielsweise Schäume, Elastomere, Dichtstoffe, Beschichtungen und Klebstoffe verwendet werden. Des weiteren können Polyethercarbonatpolyole in den für den Fachmann bekannten Anwendungen von alkylenoxidbasierten Polyolen wie Wasch- und Reinigungsmittelformulierungen, Bohrflüssigkeiten, Kraftstoffadditiven, ionischen und nicht-ionischen Tensiden, Schmiermitteln, Prozesschemikalien für die Papier- oder Textilherstellung oder kosmetischen Formulierungen verwendet werden. Der hier beschriebene Prozess erlaubt die Verwendung von niedermolekularen Startersubstanzen für die Polymerisation, vermindert die BildFung von unerwünschten Nebenprodukten und ermöglicht hohe Einbauraten von Kohlendioxid in Polyethercarbonatpolyolen.

Die Herstellung von Polyethercarbonatpolyolen durch Anlagerung von Alkylenoxiden und Kohlendioxid an H-funktionelle Startsubstanzen unter Verwendung von Doppellmetallcyanidkatalysatoren, auch als DMC-Katalysatoren bezeichnet, und der Einsatz dieser Polyole, beispielsweise zur Herstellung von Polyurethanen, ist bekannt.

Allgemein verlangt der Markt nach günstigen Alternativen zu konventionellen Polyolen für Polyurethansysteme. Dem Fachmann ist bekannt, dass beispielsweise zur Herstellung von Polyurethanweichschäumen größtenteils Polyetherpolyole als Polyolkomponente verwendet werden. Polyetherpolyole werden bekanntermaßen mittels Anlagerung von Alkylenoxiden an H-funktionelle Startsubstanzen hergestellt. Die dabei am häufigsten verwendeten Alkylenoxide sind Ethylenoxid und Propylenoxid. Aus kommerzieller Sicht ist die Verwendung von Kohlendioxid als Comonomer in Alkylenoxid Polymerisationen von besonderem Interesse. Ein teilweiser Ersatz von Alkylenoxiden in Polyolen durch Kohlendioxid hat das Potential die Kosten für die Herstellung von Polyolen deutlich zu senken.

Obwohl die Verwendung von Kohlendioxid als Comonomer in der Polymerisation von Alkylenoxiden seit Ende der 60iger Jahre bekannt ist (Inou et al., Copolymerization of Carbon Dioxide and Epoxide with Organometallic Compounds, Die Makromolekulare Chemie 130, 210 - 220, 1969), standen die Nachteile der bisher bekannten Verfahren einer breiten Vermarktung im Wege.

Um gegenüber bestehenden Polyolen wirtschaftlich und anwendungstechnisch konkurrenzfähige Polyethercarbonatpolyole herstellen zu können, müssen energie- und kostenintensive Verfahren, die hohe Drücke, hohe Temperaturen und lange Reaktionszeiten erfordern, vermieden werden.

Dem Fachmann ist bekannt, dass abhängig vom jeweiligen Anwendungsgebiet, beispielsweise in Polyurethansystemen, zu verwendende Polyole erforderliche Stoffeigenschaften wie Molekulargewichte, Viskositäten, Polydispersitäten und Funktionalitäten erfüllen müssen.

Des weiteren ist bei der Verwendung von Prozesschemikalien wie Lösungsmitteln, Katalysatoren oder Cokatalysatoren deren Kosten, aber vor allem der Aufwand zu deren Abtrennung aus dem Produkt nach der Herstellung zu berücksichtigen. Die Abtrennung von Nebenkomponenten kann zum einen zur Vermeidung von Störungen in den anschließenden Reaktionen mit beispielsweise Polyisocyanaten erforderlich sein, zum anderen zur Einhaltung von Spezifikationsanforderungen in den Endprodukten notwendig sein. Anforderungen können beispielsweise Gehalte an flüchtigen Komponenten, Metallen, Basen oder Säuren sein.

Es ist bekannt, dass sich während der Synthese von Polyethercarbonatpolyolen Nebenprodukte aus der Reaktion von Alkylenoxiden mit Kohlendioxid bilden. So tritt beispielsweise bei der Reaktion von Propylenoxid und Kohlendioxid Propylencarbonat als Nebenprodukt auf. Die Bildung von Propylencarbonat ist aus mehreren Gründen unerwünscht: Propylencarbonat konsumiert das teure Monomer Propylenoxid; Propylencarbonat kann die anschließende Reaktion von Polyethercarbonatpolyolen mit Polyisocyanaten erheblich stören und muss daher aus dem Produktgemisch abgetrennt werden; Propylencarbonat ist eine flüchtige Komponente und muss zur Einhaltung von Emissionsgrenzwerten, beispielweise von Polyurethanweichschäumen, bis zu den entsprechenden Spezifikationsgrenzen entfernt werden. Ein wirtschaftliches Verfahren zur Herstellung von Polyethercarbonatpolyolen erfordert daher eine Absenkung und wenn möglich, Vermeidung von Nebenprodukten.

US 4,500,704 beschreibt einen Prozess für die Herstellung von ausschließlich difunktionellen Polycarbonaten (synonym für die hier beschriebenen Polyethercarbonatpolyole) unter Verwendung von DMC-Katalysatoren. Da keine H-funktionellen Startersubstanzen verwendet werden, sondern ausschließlich Alkylenoxide und Kohlendioxid zur Reaktion gebracht werden, können Funktionalitäten > 2 mit dem beschriebenen Prozess nicht realisiert werden. Des weiteren erfordert der Prozess Drücke zwischen 27,6 bis 75,8 bar, da ansonsten die Ausbeuten sehr gering ausfallen. Die Reaktionszeiten von mindestens 48 h sind unwirtschaftlich.

WO 2004/087788 beschreibt die Herstellung von Polyethercarbonatpolyolen mit Multimetallcyanidkatalysatoren unter Zusatz von Kettenüberträgern, beispielsweise Tertiärbutanol, zur Erniedrigung der Polydispersität. Dabei werden 10fache, vorzugsweise 50fache und ganz besonders bevorzugt über 100fache molare Überschüsse, bezogen auf den Katalysator eingesetzt. Die niedrigste beschriebene Polydispersität lag bei 1,31. Da es sich bei den aufgeführten Kettenüberträgern ausschließlich um niedermolekulare Verbindungen handelt und diese, wie beschrieben, nicht an der

Reaktion von Kohlendioxid oder Alkylenoxiden teilnehmen, müssen diese nach der Herstellung der Polyethercarbonatpolyole in einem weiteren Verfahrensschritt abgetrennt werden. Bei dem beschriebenen Prozess handelt es sich um einen Hochdruckprozess. Die Beispiele zur Herstellung von Polyethercarbonatpolyolen lagen zwischen 57,9 und 62,1 bar.

In US 6,762,278 wird ein Verfahren zur Copolymerisation von Alkylenoxiden und Kohlendioxid mit Multimetallcyanidkatalysatoren beschrieben, wobei Zn / Co - Katalysatoren bevorzugt sind, die kristallin und zu mindestens 30 Gew.-% aus plättchenförmigen Partikeln bestehen. Die Herstellung der Polyethercarbonatpolyole erfolgt in Temperaturbereichen von 40 - 180°C mit Katalysatormengen von maximal 1 Gew.-%. Dabei erfordert das beschriebene Verfahren Drücke von 0,7 - 206,8 bar. Es wird beschrieben, dass die Einbaurate von Carbonateinheiten in den Polyethercarbonatpolyolen stark vom Druck abhängt. Auffällig an den Beispielen ist, dass für den Gehalt von > 5 Gew.% Carbonateinheiten in Polyethercarbonatpolyolen in diesem Verfahren Drücke von mindestens > 34,5 bar (500 psi) erforderlich sind. Wird ein Druck von 13,8 bar (200 psi) gewählt, wie in Beispiel 5, so sinkt der Carbonatgehalt im Polymer deutlich auf 2,6 Gew.%. Daraus ist zu folgern, dass nach dem beschriebenen Verfahren kostenintensive Hochdruckapparaturen für eine großtechnische Herstellung von Polyethercarbonatpolyolen erforderlich wären, wenn Carbonatgehalte > 5 Gew.% angestrebt würden. Quantitative Aussagen über die Bildung des Nebenprodukts Propylencarbonat, wie auch die Reaktionszeiten fehlen.

EP 222,453 beschreibt ein Verfahren zur Herstellung von Polycarbonaten (synonym für die hier beschriebenen Polyethercarbonatpolyole), durch Reaktion von Kohlendioxid und Alkylenoxiden in Gegenwart von Doppelmetallcyanidkatalysatoren, eines oder mehrerer Salze(s) von mindestens bivalenten Metallkationen und nichtmetallischen Anionen und/oder einer oder mehrerer Säuren, die keine Metallionen enthält oder enthalten. Bevorzugt werden Zn / Co - Doppelmetallcyanidkatalysatoren beschrieben. Die Gesamtmenge an Katalysator und Co-Katalysator liegt bezogen auf die eingesetzten Startersubstanzmengen zwischen 0,01 - 15 Gew.%. Die Herstellung der Polycarbonate erfolgt in Temperaturbereichen von 40 - 200°C. Von Vorteil in dem beschriebenen Verfahren sind die milden Reaktionsbedingungen hinsichtlich Druck und Temperatur, die es ermöglichen würden Standardreaktoren für Polyetherpolyol Synthesen zu verwenden. Nachteilig in dem Verfahren sind die sehr hohen Mengen an Propylencarbonat die entstehen. Je nach eingestelltem Reaktordruck zeigen die Beispiele 1 bis 9 Propylencarbonatgehalte von 12,8 Gew.% (Beispiel 1) bis 30,7 Gew.% (Beispiel 3). Der niedrigste Gehalt an Propylencarbonat des Beispiels 1 geht mit einer niedrigen Kohlendioxid Einbaurate von 4,8 mol% einher. Die hohen Mengen an Propylencarbonat, die sich mit dem beschriebenen Verfahren ergeben, machen es aus den oben erwähnten Gründen des Propylenoxidverbrauchs und der erforderlichen Abtrennung unwirtschaftlich.

Es war daher Aufgabe der vorliegenden Erfindung ein im Vergleich zu konventionellen Polyolen, im speziellen Polyetherpolyolen, wirtschftlich kompetetives Verfahren zur Herstellung von Polyethercarbonatpolyolen zu entwickeln. Das Verfahren sollte einfach und mit geringem apparativem Aufwand durchgeführt werden, wobei energie- und kostenintensive Verfahrensschritte wie hohe Drücke, hohe Temperaturen und lange Reaktionszeiten vermieden werden sollten. Die Polyethercarbonatpolyole sollten bezüglich Viskosität, Polydispersität, Molgewicht und der Möglichkeit von variabel einstellbaren Funktionalitäten entsprechend ihres Einsatzgebietes gute Eigenschaften aufweisen. Die Verwendung von Lösungsmitteln sollte vermieden werden und der Gehalt an DMC-Katalysator so niedrig wie möglich gehalten werden. Gleichzeitig sollte der Gehalt an eingebautem Kohlendioxid in Form von Carbonateinheiten hoch sein und die Bildung von Nebenprodukt(en) aus der Reaktion von Alkylenoxid(en) mit Kohlendioxid so niedrig wie möglich sein.

Überraschenderweise wurde gefunden, dass Polyethercarbonatpolyole mit den genannten Forderungen durch Polyaddition von Alkylenoxiden und Kohlendioxid an H-funktionelle Startersubstanzen, mit einer Funktionalität von mindestens 1, unter Verwendung von DMC-Katalysatoren hergestellt werden können, in dem eine oder mehrere Startersubstanzen im Reaktor vorgelegt und eine oder mehrere Startersubstanzen während der Reaktion kontinuierlich in den Reaktor zudosiert werden.

Gegenstand der Erfindung ist demzufolge Verfahren zur Herstellung von Polyethercarbonatpolyolen durch Anlagerung von Alkylenoxiden und Kohlendioxid an H-funktionelle Startersubstanzen unter Verwendung von DMC-Katalysatoren, dadurch gekennzeichnet, dass eine oder mehrere Startersubstanzen $S_R$ im Reaktor vorgelegt und eine oder mehrere Startersubstanzen $S_K$ während der Reaktion kontinuierlich in den Reaktor zudosiert werden, wobei die Menge an ein oder mehreren Startersubstanzen, die während der Reaktion kontinuierlich in den Reaktor zudosiert zugegeben werden, mindestens 20 mol % Äquivalente der gesamten Startersubstanzmenge beträgt, und wobei für die Startersubstanzen $S_R$ höhermolekulate Verbindungen mit einem Molekulargewicht von mindestens Mn = 300 g/mol und einer Funktionalität von mindestens 1 und für die Startersubstanzen $S_K$ niedermolekulare Verbindungen mit einem Molekulargewicht von weniger als Mn = 200 g/mol und einer Funktionalität von mindestens 1 eingesetzt werden, und wobei die H-funktionellen Startersubstanzen ausgewählt sind aus der Liste bestehend aus Methanol, C10 - C20 nAlkylmonoalkoholen, Glykol, Propandiol, Diethylenglykol, Dipropylenglykol, Glyzerin, Trimethylolpropan, Pentaerythrit, Rizinusöl, Sorbit, Polyetherpolyolen, aufgebaut aus sich wiederholenden Polyalkylenoxideinheiten, und Polyethercarbonatpolyolen.

Die Menge an ein oder mehreren Startersubstanzen, die während der Reaktion kontinuierlich in den Reaktor

zudosiert werden, beträgt dabei mindestens 20 mol % Äquivalente und bevorzugt mindestens 40 mol % Äquivalente der gesamten Startersubstanzmenge.

In einer bevorzugten Ausführungsform des erfindungsgemäßen Verfahrens beträgt während der Reaktion die Konzentration an freien Alkylenoxiden in der Reaktionsmischung > 0 - 40 Gew.-%, vorzugsweise > 0 - 25 Gew.-%, besonders bevorzugt > 0 - 15 Gew.-% und insbesondere > 0 -10 Gew.-%, bezogen auf das Gewicht der Reaktionsmischung.

In einer weiteren bevorzugten Ausführungsform des erfindungsgemäßen Verfahrens weisen die Kettenenden der Polyethercarbonatpolyole einen Block aus im mittel mindestens zwei, bevorzugt aus im Mittel drei, bevorzugt aus im Mittel mehr als drei Alkylenoxideinheiten auf.

Unter dem Begriff "Reaktionsmischung" wird die im Reaktor befindliche Mischung aus Einsatzstoffen und Reaktionsprodukten verstanden.

Die Messung der Konzentration an freien Alkylenoxiden in der Reaktionsmischung kann beispielsweise mittels ATR-FTIR-Sonde, einer Dichtemessung, GC, GC/MS, HPLC oder sonstiger direkter oder indirekter Methoden erfolgen. Üblicherweise erfolgt im Rahmen dieser Erfindung die Messung der Konzentration an freien Alkylenoxiden in der Reaktionsmischung mittels ATR-FTIR-Sonde.

Dem Fachmann ist verständlich, dass zur Berechnung der einzusetzenden Mengen an Alkylenoxiden und des Kohlendioxids entsprechende Kennzahlen der Startersubstanzen und des Polyethercarbonatpolyols verwendet werden. Wird beispielsweise ein mehrfunktioneller Alkohol als Startersubstanz eingesetzt, so dient dessen Hydroxylzahl und die angestrebte Hydroxylzahl des damit zu synthetisierenden Polyethercarbonatpolyols als Grundlage zur Berechnung der Mengen an Alkylenoxiden und des Kohlendioxids. Werden Amine als Startersubstanzen eingesetzt, so dienen die Aminzahlen als Grundlage, bei Säuren die entsprechenden Säurezahlen. Für die Bestimmung einer Hydroxyl-, Amin- oder Säurezahl ist es notwendig die Funktionalität des gemessenen Stoffes zu kennen. Weiterhin ist hinlänglich bekannt, dass die Funktionalität der eingesetzten Startersubstanz oder das Gemisch mehrerer Startersubstanzen die Funktionalität des damit mittels Alkoxylierung hergestellten Polyols bestimmt. Gleiches gilt hier für die erfindungsgemäßen Polyethercarbonatpolyole. Eine trifunktionelle Startersubstanz, wie beispielsweise Glycerin, erzeugt demnach ein trifunktionelles Polyethercarbonatpolyol.

In dem erfindungsgemäßen Verfahren wird eine oder mehrere Startersubstanzen kontinuierlich zudosiert und soll im folgenden als $S_K$ bezeichnet werden. Zusätzlich wird eine oder mehrere Startersubstanzen im Reaktor vorgelegt und soll im folgenden als $S_R$ bezeichnet werden. $S_K$ und $S_R$ ergeben zusammen die gesamte Startermenge $S_G = S_K + S_R$. $S_K$ und $S_R$ sind verschieden, besonders bevorzugt sind $S_K$ und $S_R$ verschieden, weisen jedoch die gleiche Funktionalität auf und ganz besonders bevorzugt sind $S_K$ und $S_R$ verschieden, weisen gleiche Funktionalität auf und $S_R$ wird durch Alkoxylierung von $S_K$ hergestellt. Als Beispiel für die besonders bevorzugten Strukturen von $S_K$ und $S_R$ sei Glycerin als $S_K$ und propoxyliertes Glycerin als $S_R$ genannt. Es ist aus den obigen Ausführungen verständlich, dass die molare Menge und Funktionalität von $S_G$ sich aus der molaren Menge des zu synthetisierenden Polyethercarbonatpolyols ergibt. Die molaren Mengen für $S_K$ und $S_R$ ergeben sich aus $S_G$, wobei $S_G$ jeweils 100 mol % Äquivalente darstellt. Die jeweiligen Anteile, die auf $S_K$ und $S_R$ entfallen, werden prozessbedingt gewählt. Die Menge an $S_K$ beträgt dabei mindestens 20 mol % Äquivalente und bevorzugt mindestens 40 mol % Äquivalente von $S_G$.

Vorzugsweise beträgt bei dem erfindungsgemäßen Verfahren der Gehalt von eingebautem Kohlendioxid in Form von Carbonateinheiten, bezogen auf den durch die Reaktion aufgebauten Molekülteil ohne die Startersubstanz(en), 2 - 25 Gew.-%, vorzugsweise 3 - 20 Gew.-% und besonders bevorzugt 5 -15 Gew.-%.

Der Reaktorgesamtdruck bei dem erfindungsgemäßen Verfahren liegt vorzugsweise im Bereich von 0 - 30 bar, bevorzugt 1 - 15 bar und ganz besonders bevorzugt von 3 - 10 bar und die Reaktionstemperatur im Bereich von 60 - 150 °C, bevorzugt 70 -140 °C und besonders bevorzugt von 80 -130 °C.

Dem Fachmann ist bekannt, dass zur Synthese von Polyetherolen häufig die gesamte Menge an einer oder ein Gemisch mehrerer Startersubstanzen in batch oder semi-batch Prozessen zusammen mit dem entsprechenden Katalysator vorgelegt werden und entsprechende ein oder mehrere Alkylenoxide zudosiert werden. Des weiteren ist bekannt, dass DMC-Katalysatoren mit niedermolekularen Startersubstanzen wie Wasser, Propylenglykol, Glycerin, Trimethylolpropan, Diethylenglykol und anderen ein sehr schlechtes Reaktionsverhalten aufweisen, beziehungsweise keine Reaktion zeigen. Da niedermolekulare Startersubstanzen inhibierend wirken, werden insbesondere bei batch oder semibatch Prozessen, bei denen die gesamte Startersubstanzmenge vorgelegt wird, Polyetherole oder andere höhermolekulare H-funktionelle Startersubstanzen eingesetzt. Nachteil dieser Verfahren ist, dass die höhermolekularen Startersubstanzen, meist Polyetherpolyole, in einem separaten Schritt zunächst synthetisiert werden müssen.

EP 879,259 beschreibt ein Verfahren bei dem dieses Problem umgangen werden kann. Durch kontinuierliche Dosierung einer Teilmenge von mindestens 2 mol % Äquivalenten oder optional der gesamten Startersubstanzmenge können niedermolekulare Startersubstanzen zur Synthese von Polyetherpolyolen eingesetzt werden, ohne dass es zu breiten Molgewichtsverteilungen kommt. Der restliche Anteil an Startersubstanz wird im Reaktor zusammen mit dem DMC-Katalysator vorgelegt. Vorzugsweise hat die Startersubstanz, die im Reaktor vorgelegt wird, die gleiche Funktionalität wie die niedermolekulare, zu dosierende Startersubstanz. Der Unterschied besteht darin, dass die vorgelegte

Startersubstanz zu einem gewissen Grad alkoxyliert sein muss, um ihrerseits nicht inhibierend auf den DMC-Katalysator zu wirken. Es kann im beschriebenen Verfahren sogar Produkt aus einer vorhergehenden Synthese vorgelegt werden ("heel"-Prozess).

Dem Fachmann ist des weiteren bekannt, dass Kohlendioxid die Reaktivität von DMC-Katalysatoren absenkt. So weisen alle oben beschriebenen Verfahren im Vergleich zu Polymerisationen von Alkylenoxiden ohne die Gegenwart von Kohlendioxid mit DMC-Katalysatoren längere Reaktionszeiten auf. Gleichzeitig weisen, wie oben beschrieben, niedermolekulare Startersubstanzen, vor allem in batch und semi-batch Prozessen, ebenfalls inhibierende Wirkung auf DMC-Katalysatoren auf. Daher verwenden alle bisher bekannten Verfahren, die H-funktionelle Startersubstanzen zur Synthese von Polyethercarbonatpolyolen (synonym Polycarbonate) einsetzen, höhermolekulare, Polyetherpolyol basierte Startersubstanzen. Die Gleichzeitigkeit der inhibierenden Wirkungen des Kohlendioxid Comonomers und der niedermolekularen Startersubstanzen war bisher für die Herstellung von Polyethercarbonatpolyolen prohibitiv. So wird in den Beispielen von WO2004/087788 und US 6,762,278 ausschließlich ein Glycerin basiertes Polypropylenoxid mit mittlerem Molekulargewicht von Mw = 730 g/mol als Startersubstanz eingesetzt. Die gesamte Menge dieses Polyetherpolyols wird in allen Beispielen vor der Reaktion im Reaktor vorgelegt. Es erfolgt keine zusätzliche Dosierung von weiteren Startersubstanzen zum Reaktionsgemisch während der Reaktion. US 222,453 verwendet für alle beschriebenen Beispiele ein Glycerin basiertes Polypropylenoxid mit mittlerem Molekulargewicht von Mw = 300 g/mol (CARADOL 555-1) als Startersubstanz. Ebenfalls wird die gesamte, für die Synthese der Polyethercarbonatpolyole notwendige Menge vor der Dosierung von Alkylenoxiden und Kohlendioxid im Reaktor vorgelegt.

Überraschenderweise wurde gefunden, dass bei der Synthese von Polyethercarbonatpolyolen nicht die gesamte Startersubstanzmenge $S_G$ im Reaktor vorgelegt werden muss, die für die Synthese des jeweiligen Polyethercarbonatpolyols mit entprechendem Molekulargewicht notwendig ist, sondern eine oder mehrere Startersubstanzen kontinuierlich dosiert ($S_K$) und eine oder mehrere Startersubstanzen im Reaktor vorgelegt ($S_R$) werden können. Es zeigt sich mit dem hier beschriebenen Verfahren, dass trotz Dosierung von niedermolekularen Startersubstanzen die Reaktion gut verläuft. Überraschend war weiterhin, dass im Vergleich zu früheren Verfahren, bei denen die gesamte Startersubstanzmenge $S_G$ im Reaktor vorgelegt wird, mit dem hier beschriebenen Verfahren höhere Einbauraten von Kohlendioxid in Polyethercarbonatpolyolen erreicht werden können und gleichzeitig die Bildung von Nebenprodukten aus der Reaktion von Alkylenoxiden und Kohlendioxid gesenkt werden.

Auf die sonstigen Vorteile, die in EP 879,259 genannt werden und sich bei einer kontinuierlichen Zugabe von ein oder mehreren Startersubstanzen (hier $S_K$) ergeben, wie beispielsweise eine effiziente Reaktorauslastung, Verwendung von niedermolekularen Startersubstanzen, enge Molekulargewichtsverteilungen, etc. wird hier Bezug genommen. Die in EP 879,259 beschriebene Verfahrensvariante, bei der keine Startersubstanzen im Reaktor vorgelegt werden und stattdessen Lösungsmittel wie Toluol eingesetzt werden, ist für das erfindungsgemäße Verfahren nicht bevorzugt. Ein Einsatz von Lösungsmitteln würde eine Abtrennung aus dem Produkt erfordern, was nach Aufgabenstellung zu vermeiden war.

Polyethercarbonatpolyole, hergestellt nach dem erfindungsgemäßen Verfahren, zeichnen sich dadurch aus, dass durch Anlagerung von Alkylenoxiden und Kohlendioxid an H-funktionelle Startsubstanzen, mit einer Funktionalität von mindestens 1, unter Verwendung von DMC-Katalysatoren, der Gehalt von eingebautem Kohlendioxid in Form von Carbonateinheiten, bezogen auf den durch die Reaktion aufgebauten Molekülteil ohne die Startersubstanz(en) mindestens 2 - 25 Gew.%, vorzugsweise 3 - 20 Gew.-% und besonders bevorzugt 5 -15 Gew.-% beträgt.

Dabei bezieht sich der Gehalt an eingebautem Kohlendioxid auf den durch die Reaktion aufgebauten Molekülteil des jeweiligen Polyethercarbonatpolyols ohne die Startersubstanz(en).

Die Herstellung der Polyethercarbonatpolyole erfolgt, wie beschrieben, durch katalytische Anlagerung von Alkylenoxiden und Kohlendioxid an H-funktionelle Startersubstanzen. Zur Umsetzung wird die Startersubstanz oder ein Gemisch aus mindestens zwei Startersubstanzen vorgelegt und, so weit notwendig, Wasser und/oder andere leicht flüchtige Verbindungen entfernt. Dabei handelt es sich, wie beschrieben, nicht um die gesamte Startersubstanzmenge $S_G$, sondern um $S_R$. Es handelt sich bei $S_R$ um eine oder ein Gemisch aus mindestens zwei Startersubstanzen mit einem Molekulargewicht von mindestens $M_n$ = 300 g/mol und mit einer Funktionalität von mindestens 1.

Die Entfernung von Wasser und/oder anderen, leicht flüchtigen Verbindungen erfolgt beispielsweise mittels Strippen mit Stickstoff unter vermindertem Druck oder durch Destillation unter Vakuum bei Temperaturen von 50 - 200°C, bevorzugt 80 -160 °C, besonders bevorzugt bei 100 - 130°C. Bevorzugt ist bei dem hier beschriebenen erfindungsgemäßen Verfahren die Destillation unter Vakuum bei Temperaturen von 100 - 130°C. Diese Vorbehandlung von $S_R$ aus einer oder dem Gemisch von mindestens zwei Startersubstanzen wird im folgenden vereinfacht als Trocknung bezeichnet.

Dabei kann der Katalysator bereits in $S_R$ vorgelegt sein, es ist jedoch auch möglich, den Katalysator erst nach der Trocknung von $S_R$ zuzusetzen. Der Katalysator kann in fester Form oder als konzentrierte Suspension in einer Startersubstanz zugegeben geändertes Blatt werden. Bevorzugt wird der Katalysator als Suspension in einer Startersubstanz, besonders bevorzugt in der gleichen Startersubstanz oder Startersubstanzmischung, wie der zuvor vorgelegten $S_R$, zugegeben. Wird der Katalysator als Suspension zugegeben, wird diese bevorzugt vor der Trocknung von

$S_R$ zugefügt. Typische Konzentrationen des DMC-Katalysators in der Katalysatorsuspension liegen zwischen 2 - 50 Gew.%, bevorzugt 2 - 25 Gew.% und besonders bevorzugt 2 -10 Gew. %, bezogen auf die Katalysatorsuspension.

Vor der Dosierung eines oder mehrerer Alkylenoxide, des Kohlendioxids und $S_K$ kann der Reaktor mit einem Schutzgas wie zum Beispiel Stickstoff inertisiert oder evakuiert werden. Bevorzugt wird der Reaktor vor der Dosierung eines oder mehrerer Alkylenoxide, des Kohlendioxids und $S_K$ durch mehrmaliges, wechselweises Anlegen von Vakuum und anschließendes Spülen mit Stickstoff inertisiert, um unerwünschte Reaktionen eines oder mehrerer Alkylenoxide mit Sauerstoff zu vermeiden.

Die Dosierung eines oder mehrerer Alkylenoxide, des Kohlendioxids und $S_K$ erfolgt nach der optionalen Trocknung von $S_R$ und der Zugabe des Multimetallcyanidkatalysators, der vor oder nach der Trocknung als Feststoff oder in Form einer Suspension zugegeben wird. Die Dosierung eines oder mehrerer Alkylenoxide, des Kohlendioxids und $S_K$ kann prinzipiell in unterschiedlicher Weise erfolgen. Der Start der Dosierung kann aus dem Vakuum heraus oder bei einem zuvor gewählten Vordruck erfolgen. Der Vordruck wird bevorzugt durch Einleiten eines Inertgases wie beispielsweise Stickstoff eingestellt, wobei der Druck vorzugsweise zwischen 10 mbar- 5 bar, vorzugsweise 100 mbar - 3 bar und besonders bevorzugt 500 mbar - 2 bar eingestellt wird.

Die Dosierung eines oder mehrerer Alkylenoxide, des Kohlendioxids und $S_K$ kann simultan oder sequentiell erfolgen, wobei die gesamte Kohlendioxidmenge auf einmal oder dosiert über die Reaktionszeit zugegeben werden kann. Vorzugsweise erfolgt eine Dosierung des Kohlendioxids. Die Dosierung eines oder mehrerer Alkylenoxide erfolgt simultan oder sequentiell zur Kohlendioxid Dosierung. Werden mehrere Alkylenoxide zur Synthese der Polyethercarbonatpolyole eingesetzt, so kann deren Dosierung simultan oder sequentiell über jeweils separate Dosierungen erfolgen oder über eine oder mehrere Dosierungen, wobei mindestens zwei Alkylenoxide als Gemisch dosiert werden. Über die Art der Dosierung der Alkylenoxide und des Kohlendioxids ist es möglich, statistische, alternierende, blockartige oder gradientenartige Polyethercarbonatpolyole zu synthetisieren. Die Dosierung von $S_K$ kann simultan oder sequentiell zu den ein oder mehreren Alkylenoxid Dosierungen und zu der Kohlendioxid Dosierung erfolgen. Handelt es sich bei $S_K$ um eine einzelne Startersubstanz, kann diese über eine einzelne, separate Dosierung dem Reaktor zugeführt werden oder als Gemisch mit einem oder mehreren Alkylenoxiden. Ist $S_K$ eine einzelne Startersubstanz, so wird diese bevorzugt separat dosiert. Handelt es sich bei $S_K$ um mehr als eine Startersubstanz, können diese als einzelne Substanzen oder als Gemisch oder als Gemisch mit einem oder mehreren Alkylenoxiden dosiert werden. Besteht $S_K$ aus mehr als einer Startersubstanz, so werden diese bevorzugt nicht als Gemisch mit Alkylenoxiden dosiert, sondern besonders bevorzugt als Gemisch aller Startersubstanzen über eine Dosierung dem Reaktor zugeführt. Für das erfindungsgemäße Verfahren ist es, wie beschrieben, unabhängig von der Art der Dosierung von Vorteil, dass die Konzentration der freien Alkylenoxide in Summe während der gesamten Dosierzeit zwischen 0 - 40 Gew.%, besonders 0 -25 Gew.%, insbesondere 0 -15 Gew.% und ganz besonders 0 -10 Gew. %, bezogen auf die Masse der flüssigen Phase, beträgt.

Die für die Synthese der Polyethercarbonatpolyole zu verwendende Menge an Kohlendioxid berechnet sich aus den oben beschriebenen Kennzahlen der eingesetzten Startersubstanzen, der Hydroxylzahl des Produktes und der gewünschten Einbaurate an Kohlendioxid im Polyethercarbonatpolyol. Die eingesetzte Menge Kohlendioxid kann von der berechneten Menge abweichen. Vorzugsweise wird ein Überschuss an Kohlendioxid eingesetzt, insbesondere wird die Menge an Kohlendioxid über den Gesamtdruck bei Reaktionsbedingungen bestimmt. Bedingt durch die Reaktionsträgheit von Kohlendioxid gegenüber DMC katalysierten Alkoxylierungen ist ein Überschuss von Kohlendioxid von Vorteil. Für das erfindungsgemäße Verfahren hat sich weiterhin gezeigt, dass die Reaktion bei 60 -150 °C, bevorzugt bei 70 - 140°C besonders bevorzugt bei 80 - 130°C und Drucken von 0 - 20 bar, bevorzugt 1 - 15 bar und besonders bevorzugt von 3 -10 bar gewünschte Polyethercarbonatpolyole erzeugt. Werden Temperaturen unterhalb von 60°C eingestellt, kommt die Reaktion zum erliegen. Bei Temperaturen oberhalb von 150°C steigt die Menge an unerwünschten Nebenprodukten stark an.

In einer besonderen Ausführungsform der Erfindung wird die Reaktionstemperatur und der Reaktorgesamtdruck während der Reaktion variiert.

Nachdem $S_R$ zusammen mit dem Multimetallcyanidkatalysator getrocknet und inertisiert wurden, können entweder aus dem Vakuum oder mit einem eingestellten Vordruck, bevorzugt aus dem Vakuum ein oder mehrere Alkylenoxide, Kohlendioxid und $S_K$ dosiert werden. Die Zugabe von Kohlendioxid kann vor, nach oder gleichzeitig mit der Zugabe des Alkylenoxids und $S_K$ erfolgen. Dabei kann eine berechnete Kohlendioxidmenge, ein Überschuss der berechneten Kohlendioxidmenge oder soviel Kohlendioxid zugegeben werden, dass sich ein bestimmter Reaktordruck einstellt. Bevorzugt erfolgt die Dosierung des Kohlendioxids nach dem Start der Dosierung einer oder mehrerer Alkylenoxide und $S_K$.

In einer besonderen Ausführungsform der Erfindung wird zunächst ein Teil der Gesamtmenge ein oder mehrerer Alkylenoxide zu $S_R$ und dem Katalysator zugegeben, um das System zu aktivieren. Erst danach wird dem Reaktionsgemisch Kohlendioxid und $S_K$ zugeführt. Die Teilmenge der Alkylenoxide kann zwischen 0,1 - 20 %, bevorzugt 0,5 -10 % und besonders bevorzugt 1 - 5 % bezogen auf die Gesamtmenge der zu dosierenden Alkylenoxide liegen.

In einer weiteren besonderen und bevorzugten Ausführungsform der Erfindung wird ein Teil der Gesamtmenge ein oder mehrerer Alkylenoxide zu $S_R$ und dem Katalysator zugegeben, um das System zu aktivieren. Die Teilmenge

kann zwischen 0,1 - 20 %, bevorzugt 0,5 -10 % und besonders bevorzugt 1 - 5 % bezogen auf die Gesamtmenge der zu dosierenden Alkylenoxide ausmachen. Danach erfolgt zunächst die kontinuierliche Dosierung einer Teilmenge von $S_K$, wobei die Teilmenge zwischen 0,1 - 20 %, bevorzugt 0,5 -10 % und besonders bevorzugt 1 - 5 % bezogen auf die Gesamtmenge der zu dosierenden $S_K$ ausmachen. Vorzugsweise wird während der Dosierung der Teilmenge von $S_K$ die Dosierung ein oder mehrerer Alkylenoxide nicht gestoppt. Erst nach der Dosierung der Teilmenge von $S_K$ wird dem Reaktionsgemisch Kohlendioxid zugegeben. Vorzugsweise werden dabei die Dosierungen von $S_K$ und ein oder mehrerer Alkylenoxide nicht gestoppt.

Wird mehr als ein Alkylenoxid zur Synthese der Polyethercarbonatpolyole verwendet, können die Alkylenoxide entweder separat oder als Mischungen dosiert werden. Dem Fachmann ist verständlich, dass zum Aufbau von blockartigen Strukturen separate Dosierungen notwendig sind. Statistische Strukturen können durch separate Dosierungen einzelner Alkylenoxide oder durch Dosierung von Mischungen von Alkylenoxiden realisiert werden. Weiterhin können Kombinationen unterschiedlicher Strukturtypen in einem Polyethercarbonatpolyol durch die Art, als separate Dosierung oder als Dosierung von Mischungen, und zeitliche Abfolge der Dosierungen, beeinflusst werden. Weiterhin ist es bei der Synthese von Polyethercarbonatpolyolen möglich, den Einbau von Kohlendioxid danach zu steuern, wann und bei welchem Reaktordruck Kohlendioxid im System zugegen ist. Zum Beispiel ist es möglich, während einer Reaktion alle Dosierungen zwischenzeitlich zu stoppen, die im Reaktor befindlichen Mengen an Alkylenoxiden und Kohlendioxid abreagieren zu lassen oder mittels Anlegen von Vakuum zu entfernen, um dann entweder nur mit einem, mehreren oder Gemischen aus mehreren Alkylenoxiden fortzufahren, ohne weiteres Kohlendioxid zuzuführen. Vorzugsweise ist die gesamte Teilmenge an $S_K$ bereits dosiert, eine oder mehrere Dosierungen von ein oder mehreren Alkylenoxiden zuvor gestoppt und die im Reaktor befindlichen Mengen an freien Alkylenoxidmengen < 0,5 %, bevor mittels Anlegen von Vakuum Kohlendioxid und Reste an Alkylenoxid(en) entfernt werden.

Beispielsweise kann als $S_R$ ein Polypropylenoxid mit $M_n$ = 600 g/mol verwendet werden, das zunächst mit Propylenoxid und Kohlendioxid unter Katalyse zur Reaktion gebracht wird. Nach einer bestimmten Menge an Propylenoxid, Kohlendioxid und der gesamten Menge an zu dosierendem Monopropylenglykol ($S_K$) wird die Zufuhr des Kohlendioxids und des Propylenoxids gestoppt, das System hinsichtlich der freien Menge an Propylenoxid kontrolliert und bei < 0,5 % freiem Propylenoxid kurz evakuiert und anschließend nur noch Propylenoxid zudosiert. Somit erhält man ein Polyethercarbonatpolyol, das im Mittelteil des Moleküls einen reinen Polypropylenoxidblock enthält, nachfolgend an beiden Seiten des Moleküls jeweils eine Kette aufgebaut aus statistisch verteilten Propylenoxid- und Carbonateinheiten enthält und als Endblöcke wieder reine Propylenoxideinheiten aufweist.

In einer bevorzugten Ausführungsform der Erfindung haben die Polyethercarbonatpolyole an den Kettenenden einen Block aus im mittel mindestens zwei, bevorzugt aus im mittel drei, bevorzugt aus im mittel mehr als drei Alkylenoxideinheiten. Bei dieser Ausführungsform wird überraschenderweise die Bildung von Nebenprodukten aus der Reaktion von Kohlendioxid und Alkylenoxid(en) stark unterdrückt. Insbesondere bestehen die Blöcke am Kettenende aus Propylenoxideinheiten.

Vorzugsweise wird $S_R$ zusammen mit dem Katalysator getrocknet, inertisiert und danach der Reaktor evakuiert. Danach wird eine Teilmenge eines oder mehrerer Alkylenoxide zur Aktivierung des Systems dosiert. Die Teilmenge kann zwischen 0,1 - 20 %, bevorzugt 0,5 - 10 % und besonders bevorzugt 1 - 5 % bezogen auf die Gesamtmenge der zu dosierenden Alkylenoxide ausmachen. Die dosierte Teilmenge zur Aktivierung kann entweder nur aus einem Alkylenoxid, aus mehreren separat dosierten Alkylenoxiden oder aus einer Mischung aus mindestens zwei Alkylenoxiden bestehen. Bevorzugt besteht die Teilmenge aus einem Alkylenoxid oder aus einer Mischung aus mindestens zwei Alkylenoxiden, besonders bevorzugt aus einem Alkylenoxid und insbesondere aus Propylenoxid. Die Aktivierung des Systems ist an einer exothermen Reaktion und/oder einem Druckabfall im Reaktor zu beobachten. Es ist prinzipiell möglich, bereits bei der Aktivierung des Katalysators ein oder mehrere Alkylenoxide und Kohlendioxid zu dosieren. Bevorzugt wird zur Aktivierung des Katalysators jedoch reines Alkylenoxid, insbesondere Propylenoxid, eingesetzt, da Kohlendioxid bekanntermaßen die Reaktivität des DMC-Katalysators senkt und Propylenoxid gegenüber DMC-Katalysator im Vergleich zu anderen Alkylenoxiden aktiver ist.

Nach der Aktivierung des Katalysators erfolgt vorzugsweise zunächst die kontinuierliche Dosierung einer Teilmenge von $S_K$, wobei die Teilmenge zwischen 0,1 - 20 %, bevorzugt 0,5 - 10 % und besonders bevorzugt 1 - 5 % bezogen auf die Gesamtmenge der zu dosierenden $S_K$ ausmachen. Vorzugsweise wird während der Dosierung der Teilmenge von $S_K$ die Dosierung ein oder mehrerer Alkylenoxide nicht gestoppt.

Erst nach der Dosierung der Teilmenge von $S_K$ wird dem Reaktionsgemisch Kohlendioxid zugeführt. Vorzugsweise werden dabei die Dosierungen von $S_K$ und ein oder mehrerer Alkylenoxide nicht gestoppt. Dabei kann die gesamte einzusetzende Menge an Kohlendioxid auf einmal oder geregelt über eine eingestellte Durchflussmenge zugegeben werden. In einer weiteren Ausführungsform wird das Kohlendioxid über ein Regelventil mit einem eingestellten Druck dosiert. Fällt der Reaktordruck unter einen eingestellten Regeldruck, so wird so lange Kohlendioxid dosiert, bis der Regeldruck wieder erreicht wird. Die gesamte eingesetzte Menge an Kohlendioxid ist vorzugsweise größer als die über die gewünschte Einbaurate von Kohlendioxid im Polyethercarbonatpolyol berechnete Menge. Bevorzugt wird Kohlendioxid über eine eingestellte Durchflussmenge oder einen eingestellten Druck dosiert, besonders bevorzugt über einen

eingestellten Druck dosiert. Dem Fachmann ist verständlich, dass abhängig vom Reaktorvolumen, der Füllhöhe des Reaktors, den Eigenschaften der flüssigen Phase, der Zusammensetzung der Gasphase und weiteren Parametern bei einem voreingestelltem Druck und einer eingestellten Temperatur eine bestimmte Menge an Kohlendioxid im Reaktor ergibt. Das bedeutet, das während der Reaktion die verfügbaren Mengen von Kohlendioxid bei konstantem Druck und konstanter Temperatur dennoch unterschiedlich sind, da sich die sonstigen Parameter während der Reaktion ändern.

Für das bevorzugte Verfahren hat sich, wie beschrieben, gezeigt, dass bei 60 - 150°C, bevorzugt bei 70 -140°C besonders bevorzugt bei 80 -130°C und Drücken von 0 - 20 bar, bevorzugt 1 -15 bar und besonders bevorzugt von 3 -10 bar gewünschte Polyethercarbonatpolyole erzeugt werden können. Dabei können sowohl die Temperatur als auch der Druck während der Reaktion in den angegebenen Grenzen konstant bleiben oder variieren. Es können Temperatur- und/oder Druckprofile realisiert werden, wobei stufenweise oder kontinuierlich Temperatur und/oder Druck während der Reaktion gesenkt oder erhöht werden. Ebenfalls können während der Reaktion ein oder mehrere Dosierungen von einem oder mehreren Alkylenoxid(en) und Kohlendioxid variiert werden, wobei Dosierungen eingeschaltet, abgeschaltet oder Dosierraten erhöht oder erniedrigt werden.

Dies ist insbesondere von Wichtigkeit, als dass überraschenderweise gefunden wurde, dass die nach dem erfindungsgemäßen Verfahren hergestellten Polyethercarbonatpolyole mit einem besonders niedrigen Gehalt an Nebenprodukten synthetisiert werden können, in dem während der Reaktion auf den Gehalt der freien Alkylenoxide geachtet wird. Als günstige Konzentrationsbereiche der freien Alkylenoxide, bezogen auf die Masse der flüssigen Phase, haben sich 0 - 40 Gew.-%, besonders 0 - 25 Gew.-%, insbesondere 0 - 15 Gew.-% und ganz besonders 0 -10 Gew.-% herausgestellt. Das bedeutet, dass bei der Synthese darauf zu achten ist, dass die angegebenen oberen Grenzen an freien Alkylenoxiden nicht überschritten werden. Überraschenderweise hat sich gezeigt, dass zu hohe freie Alkylenoxid Konzentrationen höhere Anteile an unerwünschten Nebenprodukten erzeugen. Während der Dosierzeit kann dies bedeuten, dass Zuläufe von einem oder mehreren Alkylenoxid(en) zwischenzeitlich heruntergeregelt oder ganz abgeschaltet werden, oder die Reaktortemperatur erhöht werden muss, um eine weitere Akkumulation von Alkylenoxid(en) zu vermeiden.

Die Regelung der Dosierung des Kohlendioxids während der Reaktion bewirkt, dass die Reaktion besser gesteuert wird und die Reaktion nicht einschläft. Dabei gilt, dass eine größere Menge Kohlendioxid einen höheren Druck und eine langsamere Reaktion bewirkt, eine kleinere Menge Kohlendioxid einen niedrigen Druck und eine schnellere Reaktion bewirkt.

Es ist verständlich, dass die Dosierung von $S_K$ ebenfalls variiert werden kann, indem die Dosierung(en) eingeschaltet, abgeschaltet oder die Dosierrate(n) erhöht oder erniedrigt werden.

Des weiteren ist klar, dass bei batch und semi-batch Prozessen die Dosierung(en) der gesamten Menge an $S_K$ vor dem Ende der Dosierung(en) ein oder mehrerer Alkylenoxide erfolgt sein muss, da ansonsten nicht abreagierte Mengen an $S_K$ im Produkt verbleiben, die abgetrennt werden müssen. Die gesamte Menge an $S_K$ muss in den Reaktor dosiert sein, bevor vorzugsweise 99% und besonders bevorzugt 95% der Gesamtmenge an einem oder mehreren Alkylenoxiden dosiert ist.

Nach der Herstellung der Polyethercarbonatpolyole nach dem erfindungsgemäßen Verfahren wird wie üblich aufgearbeitet. Dazu gehört eine Destillation zur Entfernung von nicht umgesetzten Monomeren und flüchtigen Nebenprodukten, oder, sofern erforderlich, eine Filtration. Es ist möglich den Katalysator im Endprodukt zu belassen. Für einzelne Anwendungen kann es auch erforderlich sein diesen zu entfernen, beispielsweise durch Filtration. Dem Endprodukt werden üblicherweise Antioxidantien zugesetzt.

Da es mit dem hier beschriebenen Verfahren möglich ist, kontinuierlich Startersubstanzen zu dosieren und damit hohe Einbauraten an Kohlendioxid in Polyethercarbonatpolyolen zu realisieren und gleichzeitig die Bildung von Nebenprodukten zu senken, kann das Verfahren auch auf kontinuierliche Herstellung von Polyethercarbonatpolyolen angewendet werden.

Daher erfolgt in einer weiteren bevorzugten Ausführungsform des erfindungsgemäßen Verfahrens eine kontinuierliche Herstellung der Polyethercarbonatpolyole. Hierbei werden in einem ersten Schritt der DMC-Katalysator und eine oder mehrere Startersubstanzen im Reaktor vorgelegt, wobei die verwendeten Startersubstanzen mindestens ein Molekulargewicht von $M_n$ = 300 g/mol und eine Funktionalität von mindestens 1 aufweisen. Ganz besonders bevorzugt handelt es sich bei den Startersubstanzen um in einem separaten Prozess hergestellte Polyethercarbonatpolyole, die dem Produkt entsprechen.

Danach wird die Mischung aus DMC-Katalysator und ein oder mehrere Startersubstanzen mit einem oder mehreren Alkylenoxiden, vorzugsweise Propylenoxid aktiviert. Nach der Aktivierung werden ein oder mehrere Alkylenoxid(e), Kohlendioxid und Startersubstanzen kontinuierlich dosiert. Bei den Startersubstanzen handelt es sich um niedermolekulare Verbindungen mit einer Funktionalität von mindestens 1 und Molekulargewicht $M_n$ < 200 g/mol. Um ein kontinuierliches Verfahren zu realisieren, wird das Endprodukt dem Reaktor kontinuierlich entnommen. Da gemeinsam mit dem Endprodukt auch DMC-Katalysator aus dem Reaktor entnommen wird, muss dieser in der notwendigen Menge dem Reaktor wieder zugeführt werden.

Ein derartiges Verfahren ist für die Herstellung von Polyetherpolyolen mittels DMC-Katalysatoren beispielsweise

in WO 98/03571 beschrieben.

Als geeignete Startersubstanzen für das erfindungsgemäße Verfahren verden Verbindungen mit für die Alkoxylierung aktiven H-Atomen, ausgewählt aus der Liste bestehend aus Methanol, C10 - C20 nAlkylmonoalkoholen, Glykol, Propandiol, Diethylenglykol, Dipropylenglykol, Glyzerin, Trimethylolpropan, Pentaerythrit, Rizinusöl, Sorbit, Polyetherpolyolen, aufgebaut aus sich wiederholenden Polyalkylenoxideinheiten, und Polyethercarbonatpolyolen, eingesetzt.

Für die Startersubstanzen $S_R$ werden höhermolekulare Verbindungen mit einem Molekulargewicht von mindestens $M_n$ = 300 g/mol und einer Funktionalität von mindestens 1 eingesetzt. Für die Startersubstanzen $S_K$ werden bevorzugt niedermolekulare Verbindungen mit einem Molekulargewicht von weniger als $M_n$ = 200 g/mol und einer Funktionalität von mindestens 1 verwendet. Des weiteren sind $S_K$ und $S_R$ verschieden, bevorzugt sind $S_K$ und $S_R$ verschieden, weisen jedoch die gleiche Funktionalität auf und besonders bevorzugt sind $S_K$ und $S_R$ verschieden, weisen gleiche Funktionalität auf und $S_R$ wird durch Alkoxylierung von $S_K$ hergestellt.

Die Startersubstanzen können auch aus der Substanzklasse der Polyetherpolyole ausgewählt sein, insbesondere solchen mit einem Molekulargewicht $M_n$ im Bereich von 106 bis 10000 g/mol. Als Polyetherpolyole werden mindestens 1-funktionelle, bevorzugt 1- bis 8-funktionelle, besonders bevorzugt 1- bis 3-funktionelle Polyetherpolyole eingesetzt. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Etylenoxideinheiten sind beispielsweise die Lupranol®-Marken der BASF AG. Weitere geeignete homo-Polyethylenoxide sind beispielsweise die Pluriol® E oder AE-Marken oder Lutensol®-Marken der BASF AG, geeignete homo-Polypropylenoxide sind beispielsweise die Pluriol® P-Marken der BASF AG, geeignete gemischte Copolymere aus Ethylenoxid und Propylenoxid sind beispielsweise die Pluronic® PE oder Pluriol® RPE-Marken der BASF AG.

In einer weiteren Ausführungsform der Erfindung können Polyethercarbonatpolyole als Startersubstanzen eingesetzt werden. Insbesondere werden Polyethercarbonatpolyole nach dem erfindungsgemäßen Verfahren eingesetzt. Besonders bevorzugt werden bei kontinuierlichen Prozessen zur Herstellung von Polyethercarbonatpolyolen dem Produkt in Molekulargewicht und Funktionalität entsprechende Polyethercarbonatpolyole eingesetzt. Diese als Startersubstanzen $S_K$ und/oder $S_R$, bevorzugt $S_R$, eingesetzten Polyethercarbonatpolyole werden in einem separaten Reaktionsschritt zuvor hergestellt.

Es werden als H-funktionelle Startsubstanzen, Methanol, $C_{10}$ - $C_{20}$ n-Alkylmonoalkohole, Glykol, Propandiol, Diethylenglykol, Dipropylenglykol, Glyzerin, Trimethylolpropan, Pentaerythrit, Rizinusöl, Sorbit, Polyetherpolyole, aufgebaut aus sich wiederholenden Polyalkylenoxideinheiten und Polyethercarbonatpolyole eingesetzt. Besonders bevorzugt sind Glykol, Propandiol, Diethylenglykol, Dipropylenglykol, Glyzerin, Trimethylolpropan, 1- bis 4-funktionelle Polyetherpolyole, aufgebaut aus Propylenoxid oder aus Propylenoxid und Ethylenoxid und Polyethercarbonatpolyole. Die Polyetherpolyole haben bevorzugt ein Molekulargewicht $M_n$ im Bereich von 106 bis 10000 g/mol und eine Funktionalität von 1 bis 4 und insbesondere ein Molekulargewicht $M_n$ im Bereich von 106 bis 5000 g/mol und eine Funktionalität von 1 bis 3. Besonders bevorzugt werden bei kontinuierlichen Prozessen zur Herstellung von Polyethercarbonatpolyolen dem Produkt in Molekulargewicht und Funktionalität entsprechende Polyethercarbonatpolyole eingesetzt. Diese als Startersubstanzen $S_K$ und/oder $S_R$, bevorzugt $S_R$, eingesetzten Polyethercarbonatpolyole werden in einem separaten Reaktionschritt zuvor hergestellt. Die bevorzugten Startersubstanzen werden entweder als Einzelsubstanz oder als Gemisch aus mindestens 2 der genannten Substanzen eingesetzt.

Weiterhin gilt für Startersubstanzen $S_R$, dass höhermolekulare Verbindungen mit einem Molekulargewicht von mindestens $M_n$ = 300 g/mol und eine Funktionalität von mindestens 1 eingesetzt werden. Hierbei sind insbesondere Polyetherpolyole, Rizinusöl und Polyethercarbonatpolyole bevorzugt. Im speziellen besitzen diese Polyetherpolyole und Polyethercarbonatpolyole ein Molekulargewicht $M_n$ im Bereich von 300 bis 10000 g/mol und eine Funktionalität von 1 bis 4 und insbesondere ein Molekulargewicht $M_n$ im Bereich von 300 bis 5000 g/mol und eine Funktionalität von 1 bis 3.

Für die Startersubstanzen $S_K$ werden niedermolekulare Verbindungen mit einem Molekulargewicht von weniger als $M_n$ = 200 g/mol und einer Funktionalität von mindestens 1 verwendet. Hierbei sind insbesondere Methanol, $C_{10}$ - $C_{20}$ n-Alkylmonoalkohole, Glykol, Propandiol, Diethylenglykol, Dipropylenglykol, Glyzerin, Trimethylolpropan, Pentaerythrit, Rizinusöl und Sorbit zu nennen. Besonders bevorzugt sind Glykol, Propandiol, Diethylenglykol, Dipropylenglykol, Glyzerin, Trimethylolpropan und Rizinusöl zu nennen.

Des weiteren sind $S_K$ und $S_R$ stofflich verschieden, bevorzugt sind $S_K$ und $S_R$ verschieden, weisen jedoch die gleiche Funktionalität auf und besonders bevorzugt sind $S_K$ und $S_R$ verschieden, weisen gleiche Funktionalität auf und $S_R$ wird durch Alkoxylierung von $S_K$ hergestellt.

Als Alkylenoxide können reine Alkylenoxide, Mischungen aus Alkylenoxiden oder Mischung von Oxiden technisch verfügbarer Raffinatströme verwendet werden. Allgemein können für das erfindungsgemäße Verfahren Alkylenoxide mit 2-24 Kohlenstoffatomen eingesetzt werden. Beispielhaft sollen nachfolgende Verbindungen genannt werden: Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid. In einer besonderen Ausführungsform der Erfindung können als Alkylenoxide ein- oder mehrfach epoxidierte Fette und Öle als Mono-, Di- und Triglyceride oder epoxdierte Fettsäuren oder deren $C_1$ - $C_{24}$-Ester eingesetzt werden. In einer weiteren besonderen Ausführungsform können als Alkylenoxide Epichlorhydrin, Glycidol oder Derivate des Glycidols, wie beispielsweise Methylglycidylether, Ethylglycidylether, Allylglycidylether, verwendet werden. Insbesondere werden zur Herstellung von erfindungsgemäßen Polyethercarbonatpolyolen als Alkylenoxide Ethylenoxid und/oder Propylenoxid, insbesondere Propylenoxid verwendet.

Die für die Herstellung der Polyethercarbonatpolyole eingesetzten Multimetallcyanidkatalysatoren haben vorzugsweise die allgemeine Formel (IV)

$$M^1{}_{a[}M^2(CN)_b(A)_c]_d \cdot fM^1gX_n \cdot h(H2O) \cdot eL \qquad (IV)$$

wobei

M1 ein Metallion, ausgewählt aus der Gruppe, enthaltend $Zn^{2+}$, $Fe^{2+}$, $Co^{3+}$, $Ni^{2+}$, $Mn^{2+}$, $Co^{2+}$, $Sn^{2+}$, $Pb^{2+}$, $Mo^{4+}$, $Mo^{6+}$, $Al^{3+}$, $V^{4+}$, $V^{5+}$, $Sr^{2+}$, $W^{4+}$, $W^{6+}$, $Cr^{2+}$, $Cr^{3+}$, $Cd^{2+}$,

M2 ein Metallion, ausgewählt aus der Gruppe, enthaltend $Fe^{2+}$, $Fe^{3+}$, $Co^{2+}$, $Co^{3+}$, $Mn^{2+}$, $Mn^{3+}$, $V^{4+}$, $V^{5+}$, $Cr^{2+}$, $Cr^{3+}$, $Rh^{3+}$, $Ru^{2+}$, $Ir^{3+}$

bedeuten und $M^1$ und $M^2$ gleich oder verschieden sind,

A ein Anion, ausgewählt aus der Gruppe, enthaltend Halogenid, Hydroxyd, Sulfat, Carbonat, Cyanid, Thiocyanat, Isocyanat, Cyanat, Carboxylat, Oxalat oder Nitrat,

X ein Anion, ausgewählt aus der Gruppe, enthaltend Halogenid, Hydroxyd, Sulfat, Carbonat, Cyanid, Thiocyanat, Isocyanat, Cyanat, Carboxylat, Oxalat oder Nitrat,

L ein mit Wasser mischbarer Ligand, ausgewählt aus der Gruppe, enthaltend Alko- hole Aldehyde, Ketone, Ether, Polyether, Ester, Harnstoffe, Amide, Nitrile, und Sulfide,

bedeuten, sowie

a, b, c, d, g und n so ausgewählt sind, dass die Elektroneutralität der Verbindung gewährleistet ist, und

e die Koordinationszahl des Liganden,

f eine gebrochene oder ganze Zahl größer oder gleich 0

h eine gebrochene oder ganze Zahl größer oder gleich 0 bedeuten.

Die Herstellung dieser Verbindungen erfolgt nach allgemein bekannten Verfahren, indem man die wässrige Lösung eines wasserlöslichen Metallsalzes mit der wässrigen Lösung einer Hexacyanometallatverbindung, insbesondere eines Salzes oder einer Säure, vereinigt und dazu während oder nach der Vereinigung einen wasserlöslichen Liganden gibt. Zur Herstellung des erfindungsgemäßen Polyethercarbonatpolyols werden vorzugsweise solche Multimetallcyanidkatalysatoren eingesetzt, bei denen als Hexacyanometallatverbindung die entsprechende Säure eingesetzt wurde.

Die nach dem erfindungsgemäßen Verfahren hergestellten Polyethercarbonatpolyole haben, abhängig von den eingesetzten Startersubstanzen $S_K$ und $S_R$, eine Funktionalität von mindestens 1, bevorzugt von 1 bis 8, besonders bevorzugt von 1 bis 4 und insbesondere von 1 bis 3.

Für die Startersubstanzen $S_K$ werden bevorzugt niedermolekulare Verbindungen mit einem Molekulargewicht von weniger als $M_n$ = 200 g/mol und einer Funktionalität von mindestens 1 verwendet. Des weiteren sind $S_K$ und $S_R$ stofflich verschieden, bevorzugt sind $S_K$ und $S_R$ verschieden, weisen jedoch die gleiche Funktionalität auf und besonders bevorzugt sind $S_K$ und $S_R$ verschieden, weisen gleiche Funktionalität auf und $S_R$ wird durch Alkoxylierung von $S_K$ hergestellt.

Die nach dem erfindungsgemäßen Verfahren hergestellten Polyethercarbonatpolyole besitzen vorzugsweise eine Struktur, die sich mit der allgemeinen Formel (I) beschreiben lässt.

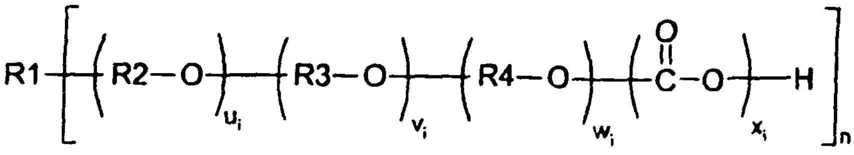 (I)

mit

R1 Startersubstanz-Rest ohne die für die Alkoxylierung aktiven H-Atome, wie bei- spielsweise Molekülreste von Wasser, ein- und mehrwertigen Alkoholen, ein- und mehrwertigen Aminen, ein- und mehrwertigen Thiolen, ein- und mehrwertigen Aminoalkoholen, ein- und mehrwertigen Thioalkoholen, Polyetherolen, Polyeste- rolen, Polyesteretherolen, Polycarbonatdiolen, Polyethyleniminen, hypverzweig- ten Polyglycerinen, hyperverzweigten Polycarbonatpolyolen, hyperverzweigten Polyesterolen, hyperverzweigten Polyurethanpolyolen, PolyTHF®, Polyetherami- nen, Polytetrahydrofuranaminen, Polyetherthiolen, Polyacrylatolen, ungesättigten Mono- und Polyhydroxyverbindungen, Polyethercarbonatpolyolen. Des weiteren dem Molekülrest von Ricinusöl, Mono- oder Diglyceriden von Ricinusöl, Mono- oder Diglyceriden von Fettsäuren, Mono-, Di-, Triglyceriden oder $C_1$ - $C_{24}$ Alkyl-Fettsäureestern mit mindestens einer Hydroxylgruppe, deren Hydroxylgruppe(n) durch dem Fachmann bekannte chemische Modifikation zuvor eingeführt wur- den.

R2 $CH_2$-$CH_2$

R3 $CH_2$-$CH(CH_3)$

R4 $CH_2$-CH(R5), CH(R6)-CH(R6), $CH_2$-$C(R6)_2$, $C(R6)_2$-$C(R6)_2$,

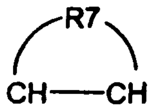

$CH_2$-CH-$CH_2$-R8, $C_6H_6$-CH-$CH_2$, $C_6H_6$-$C(CH_3)$-$CH_2$,
Molekülrest von ein- oder mehrfach epoxidierten Fetten oder Ölen als Mono-, Di- und Triglyceride, Molekülrest von ein- oder mehrfach epoxdierten Fettsäuren o- der deren $C_1$ - $C_{24}$-Alkylestern

R5 $C_2$ bis $C_{24}$ -Alkylrest, Alkenrest, der linear oder verzweigt sein kann

R6 $C_1$ bis $C_{24}$ -Alkylrest, Alkenrest, der linear oder verzweigt sein kann

R7 $C_3$ bis $C_6$ Alkylrest, der linear angeordnet ist

R8 OH, Cl, $OCH_3$, $OCH_2$-$CH_3$, O-$CH_2$-CH=$CH_2$, O-CH-$CH_2$

Dem Fachmann ist bekannt, dass durch Reaktion von Alkylenoxiden, die eine weitere für die Alkoxylierung reaktive Gruppe besitzen, Verzweigungspunkte innerhalb der Polymerkette bewirken können. So kann bei Einsatz von Glycidol als Alkylenoxid die OH-Gruppe des Glycidols eine weitere Polymerkette erzeugen, an der sich AlkylenoxidEinheiten anlagern können. Ähnliches gilt bei Einsatz von mehrfach epoxidierten Fett- oder Ölderivaten.
Des weiteren gilt

$u_i$, $v_i$, $w_i$ ganze Zahlen von 0 - 400; mit mindestens einem der Indizes $u_i$, $v_i$ oder $w_i \geq 4$;

$x_i$ ganze Zahl von 1 bis 100; wobei zusätzlich gilt, dass in der allgemeinen Formel (I) für Polyethercarbonatpolyole weder -C(=O)-O-C(=O)-O- Bindun- gen (Carbonat-Carbonat Bindung) innerhalb der Polymerketten, noch - C(=O)-OH Bindungen am Kettenende einzelner Polymerketten auftreten.

n ganze Zahl von 1 bis 100, bevorzugt von 1 bis 8, besonders bevorzugt 1 bis 4, insbesondere 1 bis 3.

i ganze Zahl mit i = 1 bis n.

Weiter gelten für die allgemeine Formel (I) vorzugsweise die folgenden Beziehungen

$$\frac{1}{n} * \sum_{i=1}^{n} \frac{x_i}{u_i + v_i + w_i + x_i} = 0{,}02 \text{ bis } 0{,}25$$

$$\frac{1}{n} * \sum_{i=1}^{n} \frac{u_i}{u_i + v_i + w_i + x_i} = 0 \text{ bis } 0{,}75$$

$$\frac{1}{n} * \sum_{i=1}^{n} \frac{v_i}{u_i + v_i + w_i + x_i} = 0 \text{ bis } 0{,}98$$

$$\frac{1}{n} * \sum_{i=1}^{n} \frac{w_i}{u_i + v_i + w_i + x_i} = 0 \text{ bis } 0{,}4$$

Die Reihenfolge der Monomerbausteine in den einzelnen Polymerketten 1 bis n ist beliebig, mit der Einschränkung, dass weder -C(=O)-O-C(=O)-O- Bindungen (Carbonat-Carbonat Bindung) innerhalb der Polymerketten, noch -C(=O)-OH Bindungen am Kettenende einzelner Polymerketten auftreten. Zusätzlich gilt, dass die n Polymerketten des Polyethercarbonatpolyols voneinander unabhängig zusammengesetzt sein können. Weiterhin kann gelten, dass während der Anlagerung nicht alle oder nur eine der n Polymerketten mittels Alkoxylierung wächst.

Bedingt durch die kontinuierliche Dosierung von $S_K$ und der Vorlage von $S_R$ ist es verständlich, dass nach der Reaktion unterschiedliche Strukturen von Polyethercarbonatpolyolen der allgemeinen Formel (I) nebeneinander vorliegen. Dies gilt insbesondere dann, wenn $S_R$ nicht durch eine Alkoxylierung von $S_K$ hergestellt wird und zusätzlich unterschiedliche Funktionalität aufweist.

Gilt in der allgemeinen Formel (I) u,v,w $\neq$ 0, oder u,v $\neq$ 0 und gleichzeitig w = 0, so können die einzelnen Bausteine (R2-O), (R3-O) und (R4-O) oder (R2-O) und (R3-O) unabhängig von (C(=O)-O)-Einheiten entweder in Form von Blöcken, streng alternierend, statistisch oder in Form von Gradienten aneinander gebunden sein.

In einer bevorzugten Ausführungsform der Erfindung haben die Polyethercarbonatpolyole der allgemeinen Formel (I) an den n Kettenenden jeweils einen Block aus im mittel mindestens zwei, bevorzugt aus im mittel drei, bevorzugt aus im mittel mehr als drei Alkylenoxideinheiten. Insbesondere bestehen die Blöcke am Kettenende aus Propylenoxideinheiten.

Bevorzugt sind Polyethercarbonatpolyole, aufgebaut aus Startersubstanzen, Ethylenoxid, Propylenoxid und Kohlendioxid. Diese lassen sich durch die allgemeine Formel (II) beschreiben.

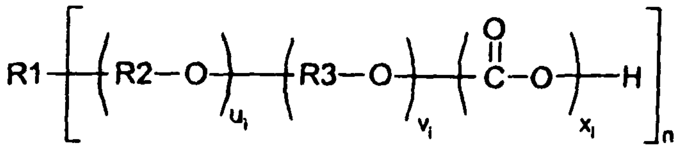

(II)

wobei R1, R2 und R3 die gleiche Bedeutung wie in Formel (I) haben.

Des weiteren gilt

$u_i$, $v_i$ ganze Zahlen von 0 - 400; mit mindestens $u_i$ oder $v_i \geq 4$;

$x_i$ ganze Zahl von 1 bis 100; wobei zusätzlich gilt, dass in der allgemeinen Formel (II) für Polyethercarbonatpolyole weder -C(=O)-O-C(=O)-O- Bindungen (Carbo- nat-Carbonat Bindung) innerhalb der Polymerketten, noch -C(=O)-OH Bindungen am Kettenende einzelner Polymerketten auftreten.

n ganze Zahl von 1 bis 100, bevorzugt von 1 bis 8, besonders bevorzugt 1 bis 4, insbesondere 1 bis 3.

i ganze Zahl mit i = 1 bis n.

Weiter gelten für die allgemeine Formel (II) vorzugsweise die folgenden Beziehungen

$$\frac{1}{n} \cdot \sum_{i=1}^{n} \frac{x_i}{u_i + v_i + x_i} = 0{,}02 \text{ bis } 0{,}25$$

$$\frac{1}{n} \cdot \sum_{i=1}^{n} \frac{u_i}{u_i + v_i + x_i} = 0 \text{ bis } 0{,}75$$

$$\frac{1}{n} \cdot \sum_{i=1}^{n} \frac{v_i}{u_i + v_i + x_i} = 0{,}2 \text{ bis } 0{,}98$$

Die Reihenfolge der Monomerbausteine in den einzelnen Polymerketten 1 bis n ist beliebig, mit der Einschränkung, dass weder -C(=O)-O-C(=O)-O- Bindungen (Carbonat-Carbonat Bindung) innerhalb der Polymerketten, noch -C(=O)-OH Bindungen am Kettenende einzelner Polymerketten auftreten. Zusätzlich gilt, dass die n Polymerketten des Polyethercarbonatpolyols voneinander unabhängig zusammengesetzt sein können. Weiterhin kann gelten, dass während der Anlagerung nicht alle oder nur eine der n Polymerketten mittels Alkoxylierung wächst.

Bedingt durch die kontinuierliche Dosierung von $S_K$ und der Vorlage von $S_R$ ist es verständlich, dass nach der Reaktion unterschiedliche Strukturen von Polyethercarbonatpolyolen der allgemeinen Formel (II) nebeneinander vorliegen. Dies gilt insbesondere dann, wenn $S_R$ nicht durch eine Alkoxylierung von $S_K$ hergestellt wird und zusätzlich unterschiedliche Funktionalität aufweist.

Gilt in der allgemeinen Formel (II) $u_i, v_i \neq 0$, so können die einzelnen Bausteine (R2-O) und (R3-O) unabhängig von (C(=O)-O)-Einheiten entweder in Form von Blöcken, streng alternierend, statistisch oder in Form von Gradienten aneinander gebunden sein.

In einer bevorzugten Ausführungsform der Erfindung haben die Polyethercarbonatpolyole der allgemeinen Formel (II) an den n Kettenenden jeweils einen Block aus im mittel mindestens zwei, bevorzugt aus im mittel drei, bevorzugt aus im mittel mehr als drei Alkylenoxideinheiten. Insbesondere bestehen die Blöcke am Kettenende aus Propylenoxideinheiten.

Besonders bevorzugt sind Polyethercarbonatpolyole, aufgebaut aus Startersubstanzen, Propylenoxid und Kohlendioxid. Diese lassen sich durch die allgemeine Formel (III) beschreiben.

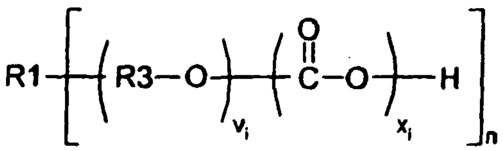

(III)

R1 und R3 haben die gleiche Bedeutung wie in Formel (I).

Des weiteren gilt

$v_i$ ganze Zahl von 4 - 400;

$x_i$ ganze Zahl von 1 bis 100; wobei zusätzlich gilt, dass in der allgemeinen Formel (III) für Polyethercarbonatpolyole weder -C(=O)-O-C(=O)-O- Bindungen (Carbo- nat-Carbonat Bindung) innerhalb der Polymerketten, noch -C(=O)-OH Bindungen am Kettenende einzelner Polymerketten auftreten.

n ganze Zahl von 1 bis 100, bevorzugt von 1 bis 8, besonders bevorzugt 1 bis 4, insbesondere 1 bis 3.

i ganze Zahl mit i = 1 bis n.

Weiter gelten für die allgemeine Formel (III) vorzugsweise die folgenden Beziehungen

$$\frac{1}{n} \cdot \sum_{i=1}^{n} \frac{x_i}{v_i + x_i} = 0{,}02 \text{ bis } 0{,}25$$

$$\frac{1}{n} \cdot \sum_{i=1}^{n} \frac{v_i}{v_i + x_i} = 0{,}75 \text{ bis } 0{,}98$$

Die Reihenfolge der Monomerbausteine in den einzelnen Polymerketten 1 bis n ist beliebig, mit der Einschränkung, dass weder -C(=O)-O-C(=O)-O- Bindungen (Carbonat-Carbonat Bindung) innerhalb der Polymerketten, noch -C(=O)-OH Bindungen am Kettenende einzelner Polymerketten auftreten. Zusätzlich gilt, dass die n Polymerketten des Polyethercarbonatpolyols voneinander unabhängig zusammengesetzt sein können. Weiterhin kann gelten, dass während der Anlagerung nicht alle oder nur eine der n Polymerketten mittels Alkoxylierung wächst.

Bedingt durch die kontinuierliche Dosierung von $S_K$ und der Vorlage von $S_R$ ist es verständlich, dass nach der Reaktion unterschiedliche Strukturen von Polyethercarbonatpolyolen der allgemeinen Formel (III) nebeneinander vorliegen. Dies gilt insbesondere dann, wenn $S_R$ nicht durch eine Alkoxylierung von $S_K$ hergestellt wird und zusätzlich unterschiedliche Funktionalität aufweist.

Durch das erfindungsgemäße Verfahren ist es überraschenderweise möglich, die Bildung von Nebenprodukten der Reaktion von ein oder mehreren Alkylenoxiden und Kohlendioxid zu unterdrücken und so Eduktverluste zu minimieren. Das Verfahren ist einfach und in üblichen Reaktoren für die Herstellung von Polyetherpolyolen durchführbar.

Die nach dem erfindungsgemäßen Verfahren hergestellten Polyethercarbonatpolyole weisen einen geringen Gehalt an Nebenprodukten auf und können problemlos verarbeitet werden, insbesondere durch Umsetzung mit Polyisocyanaten zu Polyurethanen, insbesondere Polyurethan-Weichschaumstoffen. Es ist verständlich, dass für Polyurethananwendungen Funktionalitäten der Polyethercarbonatpolyole von mindestens 2 notwendig sind. Des Weiteren können Polyethercarbonatpolyole in dem Fachmann bekannten Anwendungen von alkylenoxidbasierten Polyolen wie Wasch- und Reinigungsmittelformulierungen, Bohrflüssigkeiten, Kraftstoffadditiven, ionischen und nicht-ionischen Tensiden, Schmiermitteln, Prozesschemikalien für die Papier- oder Textilherstellung oder kosmetischen Formulierungen verwendet werden. Dem Fachmann ist bekannt, dass abhängig vom jeweiligen Anwendungsgebiet, zu verwendende Polyethercarbonatpolyole erforderliche Stoffeigenschaften wie Molekulargewichte, Viskositäten, Polydispersitäten und Funktionalitäten erfüllen müssen.

Die Erfindung soll an den nachfolgenden Beispielen näher erläutert werden.

ATR-FTIR (ATR = Attenuated Total Reflection) zur IR-online Messung:

geändertes Blatt

Während der Reaktion werden die Gehalte von freiem Propylenoxid (828 $cm^{-1}$), der Carbonatgehalt im Polyethercarbonatpolyol (1745 $cm^{-1}$) und der Carbonatgehalt im Propylencarbonat (1814 $cm^{-1}$) detektiert. Die Flächenintegrale der Absorbtionen bei angegebenen Wellenzahlen dienen zur Bestimmung der Massengehalte der entsprechenden Spezies. Zuvor erfolgte eine Kalibrierung der ATR-FTIR Sonde lediglich bezogen auf Propylenoxid. Deshalb wird der Carbonatgehalt im Polyethercarbonatpolyol mittels $^{13}$C-NMR und Gehalt an Propylencarbonat mittels GC bestimmt.

Quantitative $^{13}$C-NMR Analytik:

Zur genauen Bestimmung der Carbonatgehalte der Polyethercarbonatpolyole diente die quantitative $^{13}$C-NMR. Als Grundlage zur Auswertung dienen die Carbonatsignale im Bereich 150 - 160 ppm. Die Auswertung liefert die Summe der Carbonatgehalte von Polyethercarbonatpolyol und Propylencarbonat des isolierten Produktes.

Mit einer zusätzlichen GC-Messung wurden die Propylencarbonatgehalte bestimmt. Die Carbonatgehalt der Polyethercarbonatpolyole wurden mittels Differenz der $^{13}C$-NMR Daten und der GC Daten ermittelt.

Bei den mittels $^{13}C$-NMR und GC Daten bestimmten Carbonatgehalten der Polyethercarbonatpolyole handelt es sich um Carbonatgehalte bezogen auf das Gesamtmolekül. Carbonatgehalte bezogen auf den mittels Reaktion aufgebauten Molekülteil wurden mit Hilfe der Hydroxylzahlen der Startersubstanzen $S_R$ und $S_K$, sowie denen der isolierten Polyethercarbonatpolyole umgerechnet.

Die Funktionalität von Startersubstanzen oder Polyethercarbonatpolyolen werden in den Beispielen mit F abgekürzt.

Als Viskositäten werden dynamische Viskositäten angegeben, die mit einem RheoLab-Viskosimeter bei 25°C bestimmt wurden.

Wassergehalte wurden mittels Karl Fischer Methode bestimmt.

Hydroxylzahlen wurden mittels Titration bestimmt.

Die Molekulargewichte $M_n$ und die Polydispersitäten $P_D$ wurden mittels Gelpermeationschromatographie (GPC) an einem Polystyrolstandard mit THF als Laufmittel bestimmt.

Beispiel 1: Herstellung eines Polyethercarbonatpolyols mit Monopropylenglykol als $S_K$ und Polypropylenoxid ($M_n \sim 460$ g/mol; Hydroxyl-Zahl = 242 mgKOH/g, F = 2) als $S_R$; F = 2 und Polypropylenoxid Endblock;

In einem 20-L-Rührreaktor wurden 1950 g eines Polypropylenoxids ($M_n \sim 460$ g/mol; Hydroxylzahl-Zahl = 242 mgKOH/g, F = 2) als $S_R$ und 52,5 g einer 5,25 %igen DMC-Katalysator Suspension in dem gleichen Polypropylenoxid bei 130°C für 1 h unter Vakuum (10 mbar) getrocknet. Der Wassergehalt wurde mit 0,008 Gew.% bestimmt.

Danach wurde die Temperatur der Reaktionsmischung auf 110°C gesenkt. Zur Aktivierung des Katalysators wurden 200 g Propylenoxid mit 0,5 kg/h dosiert. Die Aktivierung des Katalysators wurde anhand der exothermen Reaktion beobachtet. Die Dosierung von Propylenoxid wurde mit 0,5 kg/h fortgesetzt. Gleichzeitig wurde der Reaktordruck mittels Dosierung von Kohlendioxid auf 3 bar erhöht. Mittels ATR-FTIR wurde die Menge an freiem Propylenoxid in der flüssigen Phase beobachtet. Diese stieg während der Dosierung von Kohlendioxid und Propylenoxid nicht über 4 Gew.%. Nachdem die Reaktion stabil lief, wurde die Dosierung von Monopropylenglykol mit 12 g/h gestartet und erneut die freie Propylenoxidmenge beobachtet (max. 5 Gew.%). Nach Stabilisierung der Reaktion wurde der Reaktordruck mittels Kohlendioxid-Dosierung auf bis zu 8 bar erhöht (ca. alle 20 min um 1 bar). Gleichzeitig wurde die Dosiergeschwindigkeit des Propylenoxids schrittweise auf 3 kg/h (ca. alle 40 min um 0,5 kg/h) und die Dosiergeschwindigkeit des Monopropylenglykols schrittweise auf 72 g/h erhöht (ca. alle 40 min um 12 g/h). Dabei wurden die Dosierungen so geregelt, dass bei einem Gehalt an freiem Propylenoxid in der Reaktionsmischung von 8 Gew.-% die Dosierungen des Propylenoxids und des Monopropylenglykols gestoppt wurden und erst wieder aufgenommen wurden, wenn der Gehalt an freiem Propylenoxid kleiner 3 Gew.-%, bezogen auf das Gewicht der Reaktionsmischung, war. Nach der Dosierung von 288 g Monopropylenglykol wurde diese Dosierung gestoppt, die Dosierungen von Propylenoxid und Kohlendioxid liefen weiter bis zu einer Menge von 13,9 kg Propylenoxid. Anschließend wurden die Dosierungen von Propylenoxid und Kohlendioxid gestoppt. Mit der Abreaktion der Monomere fiel der Druck im Reaktor ab. Nachdem der Gehalt an freiem Propylenoxid auf kleiner 0,5 Gew.-%, bezogen auf das Gewicht der Reaktionsmischung, gefallen war, wurde der Reaktor entspannt und kurz evakuiert. Danach wurde die Dosierung von Propylenoxid mit 1 kg/h erneut gestartet und die Restmenge von 250 g dosiert. Nach der Anlagerung des Propylenoxids wurde die Dosierung gestoppt, der Reaktor entspannt. Die gesamte Reaktionszeit betrug etwa 7 h. Es wurde eine Probe für die Analyse des Rohproduktes entnommen. Anschließend wurde das Produkt 3 h bei 150°C unter Vakuum gestrippt, das Produkt abgelassen und mit 200 ppm Irgastab® 1076 stabilisiert. Die gesamte Menge an dosiertem Kohlendioxid betrug 2250 g. Das Molverhältnis $S_R$ zu $S_K$ betrug 1,26.

Rohprodukt:

Masse: 18370 g
Propylencarbonat mittels GC: 3,9 %

Isoliertes Produkt:

Masse: 17650 g
Propylencarbonat mittels GC: <200 ppm
Hydroxylzahl: 51,6 mgKOH/g
Viskosität (25°C) : 1412 mPa*s
GPC: $M_n$ = 1781 g/mol; $P_D$ =1,17

Carbonatgehalt des isolierten Polyethercarbonatpolyols:

a) bezogen auf das Gesamtmolekül: 8,8 Gew.%
b) bezogen auf den polymerisierten Teil ohne Startersubstanzen: 10,3 Gew.%

Vergleichsbeispiel 1 zu Beispiel 1: Herstellung eines Polyethercarbonatpolyols mit Polypropylenoxid ($M_n \sim 460$ g/mol; Hydroxyl-Zahl = 242 mgKOH/g; F =2) als $S_R$; kein Zulauf von $S_K$; F = 2 und Polypropylenoxid Endblock;

In einem 20-L-Rührreaktor wurden 3755 g eines Polypropylenoxids ($M_n \sim 460$ g/mol;Hydroxylzahl-Zahl = 242 mgKOH/g; F = 2) als $S_R$ und 48 g einer 5,25 %igen DMC-Katalysator Suspension in dem gleichen Polypropylenoxid bei 130°C für 1 h unter Vakuum (10 mbar) getrocknet. Der Wassergehalt wurde mit 0,005 Gew.% bestimmt.

Danach wurde die Temperatur der Reaktionsmischung auf 110°C gesenkt. Zur Aktivierung des Katalysators wurden 200 g Propylenoxid mit 0,5 kg/h dosiert. Die Aktivierung des Katalysators wurde anhand der exothermen Reaktion beobachtet. Die Dosierung von Propylenoxid wurde mit 0,5 kg/h fortgesetzt. Gleichzeitig wurde der Reaktordruck mittels Dosierung von Kohlendioxid auf 3 bar erhöht. Mittels ATR-FTIR wurde die Menge an freiem Propylenoxid in der flüssigen Phase beobachtet. Diese stieg während der Dosierung von Kohlendioxid und Propylenoxid nicht über 5 Gew.%. Nach Stabilisierung der Reaktion wurde der Reaktordruck mittels Kohlendioxid-Dosierung auf bis zu 8 bar erhöht (ca. alle 20 min um 1 bar). Gleichzeitig wurde die Dosiergeschwindigkeit des Propylenoxids schrittweise auf 3 kg/h erhöht (ca. alle 40 min um 0,5 kg/h). Dabei wurden die Dosierungen so geregelt, dass bei einem Gehalt an freiem Propylenoxid in der Reaktionsmischung von 8 Gew.-% die Dosierungen des Propylenoxids gestoppt wurde und erst wieder aufgenommen wurde, wenn der Gehalt an freiem Propylenoxid kleiner 3 Gew.-%, bezogen auf das Gewicht der Reaktionsmischung, war. Nach Dosierung von 11,0 kg Propylenoxid, wurden die Dosierungen von Propylenoxid und Kohlendioxid gestoppt. Mit der Abreaktion der Monomere fiel der Druck im Reaktor ab. Nachdem der Gehalt an freiem Propylenoxid auf kleiner 0,5 Gew.-%, bezogen auf das Gewicht der Reaktionsmischung, gefallen war, wurde der Reaktor entspannt und kurz evakuiert. Danach wurde die Dosierung von Propylenoxid mit 1 kg/h erneut gestartet und die Restmenge von 370 g dosiert. Nach der Anlagerung des Propylenoxids wurde die Dosierung gestoppt, der Reaktor entspannt. Die gesamte Reaktionszeit betrug etwa 7 h. Es wurde eine Probe für die Analyse des Rohproduktes entnommen. Anschließend wurde das Produkt 3 h bei 150°C unter Vakuum gestrippt, das Produkt abgelassen und mit 200 ppm Irgastab® 1076 stabilisiert. Die gesamte Menge an dosiertem Kohlendioxid betrug 1900 g.

Rohprodukt:

Masse: 16700 g
Propylencarbonat mittels GC: 4,9 %

Isoliertes Produkt:

Masse: 14930 g
Propylencarbonat mittels GC: 350 ppm
Hydroxylzahl: 57,9 mgKOH/g
Viskosität (25°C) : 1043 mPa*s
GPC: $M_n$ = 2022 g/mol; $P_D$ =1,34

Carbonatgehalt des isolierten Polyethercarbonatpolyols:

a) bezogen auf das Gesamtmolekül: 7,8 Gew.%
b) bezogen auf den polymerisierten Teil ohne Startersubstanzen: 10,3 Gew.%

Beispiel 2: Herstellung eines Polyethercarbonatpolyols mit einem Gemisch aus Glycerin und Diethylenglykol (Molverhältnis 3:1) als $S_K$ und einem Glycerin-Diethylenglykol-basiertem (Molverhältnis 3:1) Polypropylenoxid ($M_n \sim$ 1130 g/mol; Hydroxyl-Zahl = 136 mgKOH/g; F = 2,75) als $S_R$; F = 2,75 und Polypropylenoxid Endblock;

In einem 20-L-Rührreaktor wurden 1957 g eines Glycerin-Diethylenglykol-basierten (3:1) Polypropylenoxids ($M_n \sim$ 1130 g/mol;Hydroxylzahl-Zahl = 136 mgKOH/g; F = 2,75) als $S_R$ und 46 g einer 6,0 %igen DMC-Katalysator Suspension in dem gleichen Polypropylenoxid bei 130°C für 1 h unter Vakuum (10 mbar) getrocknet. Der Wassergehalt wurde mit 0,009 Gew.% bestimmt.

Danach wurde die Temperatur der Reaktionsmischung auf 110°C gesenkt. Zur Aktivierung des Katalysators wurden 300 g Propylenoxid mit 0,5 kg/h dosiert. Die Aktivierung des Katalysators wurde anhand der exothermen Reaktion beobachtet. Die Dosierung von Propylenoxid wurde mit 0,5 kg/h fortgesetzt. Gleichzeitig wurde der Reaktordruck mittels Dosierung von Kohlendioxid auf 3 bar erhöht. Mittels ATR-FTIR wurde die Menge an freiem Propylenoxid in der flüssigen Phase beobachtet. Diese stieg während der Dosierung von Kohlendioxid und Propylenoxid nicht über 4 Gew.%. Nachdem die Reaktion stabil lief, wurde die Dosierung des Gemisches aus Glycerin und Diethylenglykol (Molverhältnis 3:1) mit 15 g/h gestartet und erneut die freie Propylenoxidmenge beobachtet (max. 6 Gew.%). Nach Stabilisierung der Reaktion wurde der Reaktordruck mittels Kohlendioxid-Dosierung auf bis zu 8 bar erhöht (ca. alle 20 min um 1 bar). Gleichzeitig wurde die Dosiergeschwindigkeit des Propylenoxids schrittweise auf 3,5 kg/h (ca. alle 40 min um 0,5 kg/h) und die Dosiergeschwindigkeit des Glycerin-Diethylenglykol-Gemisches schrittweise auf 105 g/h erhöht (ca. alle 40 min um 15

g/h). Dabei wurden die Dosierungen so geregelt, dass bei einem Gehalt an freiem Propylenoxid in der Reaktionsmischung von 8 Gew.-% die Dosierungen des Propylenoxids und des Glycerin-Diethylenglykol-Gemisches gestoppt wurden und erst wieder aufgenommen wurden, wenn der Gehalt an freiem Propylenoxid kleiner 3 Gew.-%, bezogen auf das Gewicht der Reaktionsmischung, war. Nach der Dosierung von 380 g Glycerin-Diethylenglykol-Gemisch wurde diese Dosierung gestoppt, die Dosierungen von Propylenoxid und Kohlendioxid liefen weiter bis zu einer Menge von 13,8 kg Propylenoxid. Anschließend wurden die Dosierungen von Propylenoxid und Kohlendioxid gestoppt. Mit der Abreaktion der Monomere fiel der Druck im Reaktor ab. Nachdem der Gehalt an freiem Propylenoxid auf kleiner 0,5 Gew.-%, bezogen auf das Gewicht der Reaktionsmischung, gefallen war, wurde der Reaktor entspannt und kurz evakuiert. Danach wurde die Dosierung von Propylenoxid mit 2 kg/h erneut gestartet und die Restmenge von 335 g dosiert. Nach der Anlagerung des Propylenoxids wurde die Dosierung gestoppt, der Reaktor entspannt. Die gesamte Reaktionszeit betrug etwa 7,5 h. Es wurde eine Probe für die Analyse des Rohproduktes entnommen. Anschließend wurde das Produkt 3 h bei 150°C unter Vakuum gestrippt, das Produkt abgelassen und mit 4500 ppm Irgastab® PUR 68 stabilisiert. Die gesamte Menge an dosiertem Kohlendioxid betrug 2100 g. Das Molverhältnis $S_R$ zu $S_K$ betrug 0,44.

Rohprodukt:

Masse: 18210 g
Propylencarbonat mittels GC: 3,9 %

Isoliertes Produkt:

Masse: 17400 g
Propylencarbonat mittels GC: <200 ppm
Hydroxylzahl: 50,2 mgKOH/g
Viskosität (25°C) : 2120 mPa*s
GPC: $M_n$ = 1801 g/mol; $P_D$ =1,51

Carbonatgehalt des isolierten Polyethercarbonatpolyols:

a) bezogen auf das Gesamtmolekül: 7,7 Gew.%
b) bezogen auf den polymerisierten Teil ohne Startersubstanzen: 9,2 Gew.%

Vergleichsbeispiel 2 zu Beispiel 2: Herstellung eines Polyethercarbonatpolyols einem Glycerin-Diethylenglykol-basiertem (Molverhältnis 3:1) Polypropylenoxid ($M_n \sim$ 1130 g/mol; Hydroxyl-Zahl = 136 mgKOH/g; F = 2,75) als $S_R$; kein Zulauf von $S_K$; F = 2,75 und Polypropylenoxid Endblock;

In einem 20-L-Rührreaktor wurden 5960 g eines Glycerin-Diethylenglykol-basierten (Molverhältnis 3:1) Polypropylenoxids ($M_n \sim$ 1130 g/mol;Hydroxylzahl-Zahl = 136 mgKOH/g; F = 2,75) als $S_R$ und 43 g einer 6,0 %igen DMC-Katalysator Suspension in dem gleichen Polypropylenoxid bei 130°C für 1 h unter Vakuum (10 mbar) getrocknet. Der Wassergehalt wurde mit 0,007 Gew.% bestimmt.

Danach wurde die Temperatur der Reaktionsmischung auf 110°C gesenkt. Zur Aktivierung des Katalysators wurden 300 g Propylenoxid mit 0,5 kg/h dosiert. Die Aktivierung des Katalysators wurde anhand der exothermen Reaktion beobachtet. Die Dosierung von Propylenoxid wurde mit 0,5 kg/h fortgesetzt. Gleichzeitig wurde der Reaktordruck mittels Dosierung von Kohlendioxid auf 3 bar erhöht. Mittels ATR-FTIR wurde die Menge an freiem Propylenoxid in der flüssigen Phase beobachtet. Diese stieg während der Dosierung von Kohlendioxid und Propylenoxid nicht über 5 Gew.%. Nach Stabilisierung der Reaktion wurde der Reaktordruck mittels Kohlendioxid-Dosierung auf bis zu 8 bar erhöht (ca. alle 20 min um 1 bar). Gleichzeitig wurde die Dosiergeschwindigkeit des Propylenoxids schrittweise auf 4 kg/h erhöht (ca. alle 40 min um 0,5 kg/h). Dabei wurden die Dosierungen so geregelt, dass bei einem Gehalt an freiem Propylenoxid in der Reaktionsmischung von 8 Gew.-% die Dosierungen des Propylenoxids gestoppt wurde und erst wieder aufgenommen wurde, wenn der Gehalt an freiem Propylenoxid kleiner 3 Gew.-%, bezogen auf das Gewicht der Reaktionsmischung, war. Nach Dosierung von 9,4 kg Propylenoxid, wurden die Dosierungen von Propylenoxid und Kohlendioxid gestoppt. Mit der Abreaktion der Monomere fiel der Druck im Reaktor ab. Nachdem der Gehalt an freiem Propylenoxid auf kleiner 0,5 Gew.-%, bezogen auf das Gewicht der Reaktionsmischung, gefallen war, wurde der Reaktor entspannt und kurz evakuiert. Danach wurde die Dosierung von Propylenoxid mit 1 kg/h erneut gestartet und die Restmenge von 280 g dosiert. Nach der Anlagerung des Propylenoxids wurde die Dosierung gestoppt der Reaktor entspannt. Die gesamte Reaktionszeit betrug etwa 6,5 h. Es wurde eine Probe für die Analyse des Rohproduktes entnommen. Anschließend wurde das Produkt 3 h bei 150°C unter Vakuum gestrippt, das Produkt abgelassen und mit 4500 ppm Irgastab PUR 68 stabilisiert. Die gesamte Menge an dosiertem Kohlendioxid betrug 1750 g.

Rohprodukt:

Masse: 16900 g
Propylencarbonat mittels GC: 4,3 %

Isoliertes Produkt:

Masse: 15400 g
Propylencarbonat mittels GC: 320 ppm
Hydroxylzahl: 51.3 mgKOH/g
Viskosität (25°C) : 1481 mPa*s
GPC: $M_n$ = 1708 g/mol; $P_D$ =1,58

Carbonatgehalt des isolierten Polyethercarbonatpolyols:

a) bezogen auf das Gesamtmolekül: 5,3 Gew.%
b) bezogen auf den polymerisierten Teil ohne Startersubstanzen: 12,3 Gew.%

## Patentansprüche

1. Verfahren zur Herstellung von Polyethercarbonatpolyolen durch Anlagerung von Alkylenoxiden und Kohlendioxid an H-funktionelle Startersubstanzen unter Verwendung von DMC-Katalysatoren, **dadurch gekennzeichnet, dass** eine oder mehrere Startersubstanzen $S_R$ im Reaktor vorgelegt und eine oder mehrere Startersubstanzen $S_K$ während der Reaktion kontinuierlich in den Reaktor zudosiert werden, wobei die Menge an ein oder mehreren Startersubstanzen, die während der Reaktion kontinuierlich in den Reaktor zudosiert zugegeben werden, mindestens 20 mol % Äquivalente der gesamten Startersubstanzmenge beträgt, und wobei für die Startersubstanzen $S_R$ höhermolekulare Verbindungen mit einem Molekulargewicht von mindestens Mn = 300 g/mol und einer Funktionalität von mindestens 1 und für die Startersubstanzen $S_K$ niedermolekulare Verbindungen mit einem Molekulargewicht von weniger als Mn = 200 g/mol und einer Funktionalität von mindestens 1 eingesetzt werden, und wobei die H-funktionellen Startersubstanzen ausgewählt sind aus der Liste bestehend aus Methanol, C10 - C20 nAlkylmonoalkoholen, Glykol, Propandiol, Diethylenglykol, Dipropylenglykol, Glyzerin, Trimethylolpropan, Pentaerythrit, Rizinusöl, Sorbit, Polyetherpolyolen, aufgebaut aus sich wiederholenden Polyalkylenoxideinheiten, und Polyethercarbonatpolyolen.

2. Verfahren nach Anspruch 1, **dadurch gekennzeichnet, dass** die im Reaktor vorgelegte Startsubstanz ein Umsetzungsprodukt der während der Reaktion kontinuierlich in den Reaktor zudosierten Startsubstanz mit Alkylenoxiden ist.

3. Verfahren nach Anspruch 1, **dadurch gekennzeichnet, dass** die Menge an ein oder mehreren Startersubstanzen, die während der Reaktion kontinuierlich in den Reaktor zudosiert zugegeben werden, bevorzugt mindestens 40 mol % Äquivalente der gesamten Startersubstanzmenge beträgt.

4. Verfahren nach Anspruch 1, **dadurch gekennzeichnet, dass** die Konzentration an freien Alkylenoxiden während der Reaktion in der Reaktionsmischung > 0 - 40 Gew.-%, bezogen auf das Gewicht der Reaktionsmischung, beträgt.

5. Verfahren nach Anspruch 1, **dadurch gekennzeichnet, dass** die Konzentration an freien Alkylenoxiden während der Reaktion in der Reaktionsmischung > 0 - 25 Gew.-%, bezogen auf das Gewicht der Reaktionsmischung, beträgt.

6. Verfahren nach Anspruch 1, **dadurch gekennzeichnet, dass** die Konzentration an freien Alkylenoxiden während der Reaktion in der Reaktionsmischung > 0 - 15 Gew.-%, bezogen auf das Gewicht der Reaktionsmischung, beträgt.

7. Verfahren nach Anspruch 1, **dadurch gekennzeichnet, dass** die Konzentration an freien Alkylenoxiden während der Reaktion in der Reaktionsmischung > 0 - 10 Gew.-%, bezogen auf das Gewicht der Reaktionsmischung, beträgt.

8. Verfahren nach Anspruch 1, **dadurch gekennzeichnet, dass** die Polyethercarbonatpolyole einen Gehalt von eingebautem Kohlendioxid in Form von Carbonateinheiten, bezogen auf den durch die Reaktion aufgebauten Molekülteil ohne die Startersubstanz, von 2 - 25 Gew.-% aufweisen.

9. Verfahren nach Anspruch 1, **dadurch gekennzeichnet, dass** die Polyethercarbonatpolyole einen Gehalt von eingebautem Kohlendioxid in Form von Carbonateinheiten, bezogen auf den durch die Reaktion aufgebauten Molekülteil

ohne die Startersubstanz, 3 - 20 Gew.-% aufweisen.

10. Verfahren nach Anspruch 1, **dadurch gekennzeichnet, dass** die Polyethercarbonatpolyole einen Gehalt von eingebautem Kohlendioxid in Form von Carbonateinheiten, bezogen auf den durch die Reaktion aufgebauten Molekülteil ohne die Startersubstanz, von 5 -15 Gew.-% aufweisen.

11. Verfahren nach Anspruch 1, **dadurch gekennzeichnet, dass** die Polyethercarbonatpolyole am Ende der Polyethercarbonatpolyol-Kette einen Block aus im Mittel mindestens zwei Alkylenoxideinheiten aufweisen.

12. Verfahren nach Anspruch 1, **dadurch gekennzeichnet, dass** die Polyethercarbonatpolyole am Ende der Polyethercarbonatpolyol-Kette einen Block aus im Mittel mindestens drei Alkylenoxideinheiten aufweisen.

## Claims

1. A process for preparing polyether carbonate polyols by addition of alkylene oxides and carbon dioxide onto H-functional starter substances using DMC catalysts, wherein one or more starter substances $S_R$ are initially placed in the reactor and one or more starter substances $S_K$ are metered continuously into the reactor during the reaction, the amount of one or more starter substances which are metered continuously into the reactor during the reaction being at least 20 mol% of the total amount of starter substances, where the starter substances $S_R$ used are relatively high molecular weight compounds with a molecular weight of at least Mn = 300 g/mol and a functionality of at least 1, and where the starter substances $S_K$ used are low molecular weight compounds with a molecular weight of less than Mn = 200 g/mol and a functionality of at least 1, and where the H-functional starter substances are selected from the list consisting of methanol, C10-C20 n-alkyl monoalcohols, glycol, propanediol, diethylene glycol, dipropylene glycol, glycerol, trimethylol propane, pentaerythritol, castor oil, sorbitol, polyether polyols composed of repeating polyalkylene oxide units, and polyether carbonate polyols.

2. The process according to claim 1, wherein the starter substance initially placed in the reactor is a reaction product of alkylene oxides with the starter substance metered continuously into the reactor during the reaction.

3. The process according to claim 1, wherein the amount of one or more starter substances which are metered continuously into the reactor during the reaction is preferably at least 40 mol% of the total amount of starter substances.

4. The process according to claim 1, wherein the concentration of free alkylene oxides in the reaction mixture during the reaction is > 0-40% by weight, based on the weight of the reaction mixture.

5. The process according to claim 1, wherein the concentration of free alkylene oxides in the reaction mixture during the reaction is > 0-25% by weight, based on the weight of the reaction mixture.

6. The process according to claim 1, wherein the concentration of free alkylene oxides in the reaction mixture during the reaction is > 0-15% by weight, based on the weight of the reaction mixture.

7. The process according to claim 1, wherein the concentration of free alkylene oxides in the reaction mixture during the reaction is > 0-10% by weight, based on the weight of the reaction mixture.

8. The process according to claim 1, wherein the polyether carbonate polyols have a content of incorporated carbon dioxide in the form of carbonate units, based on the part of the molecule built up by the reaction without the starter substance, of 2-25% by weight.

9. The process according to claim 1, wherein the polyether carbonate polyols have a content of incorporated carbon dioxide in the form of carbonate units, based on the part of the molecule built up by the reaction without the starter substance, of 3-20% by weight.

10. The process according to claim 1, wherein the polyether carbonate polyols have a content of incorporated carbon dioxide in the form of carbonate units, based on the part of the molecule built up by the reaction without the starter substance, of 5-15% by weight.

11. The process according to claim 1, wherein the polyether carbonate polyols have a block comprising an average of

at least two alkylene oxide units at the end of the polyether carbonate polyol chain.

12. The process according to claim 1, wherein the polyether carbonate polyols have a block comprising an average of at least three alkylene oxide units at the end of the polyether carbonate polyol chain.

**Revendications**

1. Procédé de fabrication de polyéthercarbonate polyols par addition d'oxydes d'alkylène et de dioxyde de carbone sur des substances de départ à fonction H en utilisant des catalyseurs DMC, **caractérisé en ce qu'**une ou plusieurs substances de départ $S_R$ sont chargées initialement dans le réacteur et une ou plusieurs substances de départ $S_K$ sont ajoutées en continu dans le réacteur pendant la réaction, la quantité d'une ou de plusieurs substances de départ ajoutées en continu dans le réacteur pendant la réaction étant d'au moins 20 % en moles d'équivalents de la quantité totale de substance de départ, et des composés de poids moléculaire élevé ayant un poids moléculaire d'au moins Mn = 300 g/mol et une fonctionnalité d'au moins 1 étant utilisés pour les substances de départ $S_R$ et des composés de poids moléculaire faible ayant un poids moléculaire de moins de Mn = 200 g/mol et ayant une fonctionnalité d'au moins 1 étant utilisés pour les substances de départ $S_K$, et les substances de départ à fonction H étant choisies dans la liste constituée par le méthanol, les monoalcools n-alkyliques en C10-C20, le glycol, le propanediol, le diéthylène glycol, le dipropylène glycol, la glycérine, le triméthylolpropane, la pentaérythrite, l'huile de ricin, le sorbitol, les polyéther polyols, constitués d'unités de répétition oxyde de polyalkylène, et les polyéthercarbonate polyols.

2. Procédé selon la revendication 1, **caractérisé en ce que** la substance de départ chargée initialement dans le réacteur est un produit de réaction de la substance de départ introduite en continu dans le réacteur pendant la réaction avec des oxydes d'alkylène.

3. Procédé selon la revendication 1, **caractérisé en ce que** la quantité d'une ou de plusieurs substances ajoutées en continu dans le réacteur pendant la réaction est de préférence d'au moins 40 % en moles d'équivalents de la quantité totale de substance de départ.

4. Procédé selon la revendication 1, **caractérisé en ce que** la concentration en oxydes d'alkylène libres pendant la réaction dans le mélange réactionnel est de > 0 à 40 % en poids, par rapport au poids du mélange réactionnel.

5. Procédé selon la revendication 1, **caractérisé en ce que** la concentration en oxydes d'alkylène libres pendant la réaction dans le mélange réactionnel est de > 0 à 25 % en poids, par rapport au poids du mélange réactionnel.

6. Procédé selon la revendication 1, **caractérisé en ce que** la concentration en oxydes d'alkylène libres pendant la réaction dans le mélange réactionnel est de > 0 à 15 % en poids, par rapport au poids du mélange réactionnel.

7. Procédé selon la revendication 1, **caractérisé en ce que** la concentration en oxydes d'alkylène libres pendant la réaction dans le mélange réactionnel est de > 0 à 10 % en poids, par rapport au poids du mélange réactionnel.

8. Procédé selon la revendication 1, **caractérisé en ce que** les polyéthercarbonate polyols présentent une teneur en dioxyde de carbone incorporé sous la forme d'unités carbonate, par rapport à la partie de molécule formée par la réaction sans la substance de départ, de 2 à 25 % en poids.

9. Procédé selon la revendication 1, **caractérisé en ce que** les polyéthercarbonate polyols présentent une teneur en dioxyde de carbone incorporé sous la forme d'unités carbonate, par rapport à la partie de molécule formée par la réaction sans la substance de départ, de 3 à 20 % en poids.

10. Procédé selon la revendication 1, **caractérisé en ce que** les polyéthercarbonate polyols présentent une teneur en dioxyde de carbone incorporé sous la forme d'unités carbonate, par rapport à la partie de molécule formée par la réaction sans la substance de départ, de 5 à 15 % en poids.

11. Procédé selon la revendication 1, **caractérisé en ce que** les polyéthercarbonate polyols comportent une séquence constituée en moyenne d'au moins deux unités oxyde d'alkylène à la fin de la chaîne polyéthercarbonate polyol.

12. Procédé selon la revendication 1, **caractérisé en ce que** les polyéthercarbonate polyols comportent une séquence

constituée en moyenne d'au moins trois unités oxyde d'alkylène à la fin de la chaîne polyéthercarbonate polyol.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4500704 A
- WO 2004087788 A
- US 6762278 B
- EP 222453 A
- EP 879259 A
- US 222453 A
- WO 9803571 A


### In der Beschreibung aufgeführte Nicht-Patentliteratur


- **INOU et al.** opolymerization of Carbon Dioxide and Epoxide with Organometallic Compounds. *Die Makromolekulare Chemie,* 1969, vol. 130, 210-220